(19) Europäisches Patentamt
European Patent Office
Office européen des brevets

(11) Publication number : **0 593 254 A2**

(12) **EUROPEAN PATENT APPLICATION**

(21) Application number : **93308106.9**

(22) Date of filing : **12.10.93**

(51) Int. Cl.$^5$ : **C08L 77/00**, C08L 67/00, C08L 23/16, // (C08L77/00, 23:16, 23:26), (C08L67/00, 23:16, 23:26)

(30) Priority : **12.10.92 JP 299307/92**
**12.10.92 JP 299308/92**

(43) Date of publication of application :
**20.04.94 Bulletin 94/16**

(84) Designated Contracting States :
**DE FR GB**

(71) Applicant : **Tonen Corporation**
**1-1 Hitotsubashi, 1-Chome Chiyoda-Ku**
**Tokyo 100 (JP)**

(72) Inventor : **Yokoyama, Kouichi, c/o Corporate Res. and Dev. Lab**
**Tonen Corp., 1-3-1 Nishi-Tsurugaoka, Ohi-machi**
**Iruma-gun, Saitama 354 (JP)**
Inventor : **Teraya, Tatsuo, c/o Corporate Res. and Dev. Lab**
**Tonen Corp., 1-3-1 Nishi-Tsurugaoka, Ohi-machi**
**Iruma-gun, Saitama 354 (JP)**
Inventor : **Kobayashi, Akira, c/o Corporate Res. and Dev. Lab**
**Tonen Corp., 1-3-1 Nishi-Tsurugaoka, Ohi-machi**
**Iruma-gun, Saitama 354 (JP)**
Inventor : **Kikuchi, Shintaro, c/o Corporate Res. and Dev. Lab**
**Tonen Corp., 1-3-1 Nishi-Tsurugaoka, Ohi-machi**
**Iruma-gun, Saitama 354 (JP)**
Inventor : **Fujita, Yuji, c/o Corporate Res. and Dev. Lab**
**Tonen Corp., 1-3-1 Nishi-Tsurugaoka, Ohi-machi**
**Iruma-gun, Saitama 354 (JP)**

(74) Representative : **Harvey, David Gareth et al**
**Graham Watt & Co. Riverhead**
**Sevenoaks Kent TN13 2BN (GB)**

(54) **Thermoplastic resin composition and process for producing the same.**

(57) A thermoplastic resin composition comprises (a) a polyester or polyamide, and (bl) an olefin elastomer modified with an unsaturated glycidyl compound represented by the formula (I) below,

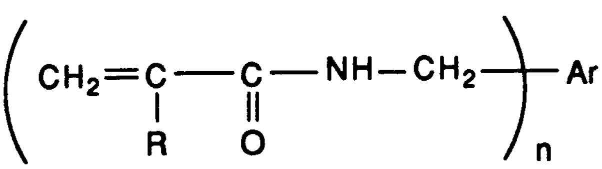

(I)

Optionally, the composition includes any one of (b2), (c), (d1) and (d2),
(b2) being a polyolefin modified with an unsaturated glycidyl compound represented by the formula (I) above ;
(c) being an olefin elastomer ;
(d1) being an olefin elastomer modified with an unsaturated carboxylic acid or a derivative thereof ; and
(d2) being a polyethylene modified with an unsaturated carboxylic acid or a derivative thereof.

The thermoplastic resin composition has the characteristic properties of an olefin elastomer and a polyester or polyamide and is light in weight and of superior heat resistance.

EP 0 593 254 A2

Jouve, 18, rue Saint-Denis, 75001 PARIS

The present invention relates to a thermoplastic resin composition containing an olefin elastomer modified with a specific unsaturated glycidyl compound, and also to a process for producing the same. More particularly, the present invention relates to a thermoplastic resin composition having both of the characteristic properties of polyesters or polyamides and olefin elastomers which make it suitable for use as automotive interior parts, home electric appliance parts, industrial machine parts, sporting goods, and furniture, and also to a process for producing the same.

Olefin polymers are light in weight and superior in impact resistance, water resistance, and weather resistance. On the other hand, they have the disadvantages of being poor in mechanical strength and heat resistance.

Attempts are being made to improve their properties by incorporation with an inorganic filler or a crystalline resin such as polyethylene and polypropylene. These attempts, however, have so far been unsuccessful because an inorganic filler deteriorates such properties as impact resistance and resilience (which are inherent in elastomers) and a crystalline resin does not contribute to heat resistance so much.

Today, extensive researches are being made on the alloying (melt-mixing) of two or more polymers having different properties, thereby forming a resin composition having their characteristic properties in combination. It is expected that if an olefin elastomer is incorporated with a resin such as polyester and polyamide, which is superior in mechanical strength and heat resistance, it would be possible to obtain a thermoplastic resin composition which has good impact resistance and weather resistance ascribed to the olefin elastomer and good mechanical properties and heat resistance ascribed to the polyester or polyamide. In fact, mere mixing does not provide a desired resin composition because of their poor compatibility. The resulting resin composition is poor in stiffness, impact resistance, and resilience due to uneven dispersion of the two components.

One way of improving an olefin elastomer in compatibility with other resins is by modifying it properly. For example, U.S. Patent No. 5,166,273 of the present applicant discloses a process for producing a modified polyolefin by modifying a polyolefin or olefin elastomer with a specific unsaturated glycidyl compound.

Also, there have been disclosed (1) a composition composed of a polyolefin or olefin elastomer modified with the aforesaid unsaturated glycidyl compound and a polyester or polyamide, and (2) a polyolefin or olefin elastomer modified with the aforesaid unsaturated glycidyl compound, a polyester or polyamide, and an unmodified olefin elastomer and/or unmodified polyolefin. See Japanese Patent Laid-open Nos. 296533/1991, 164960/1992, 164955/1992, 036345/1992, 059857/1992, 059858/1992, 122750/1992, 164951/1992, and 173817/1992; Japanese Patent Application Nos. 414660/1990 and 414661/1990 (corresponding U.S. Patent Filing No. 07/706,703).

There is also disclosed a similar composition composed of a polyolefin modified with an unsaturated glycidyl compound and a polyester or polyamide. See Japanese Patent Laid-open Nos. 285931/1991 and 285932/1991.

There is also disclosed a resin composition composed of a polyolefin or olefin elastomer modified with an unsaturated glycidyl compound and a thermoplastic resin such as polyester and polyamide. See WO 91/14714, Mitsui Toatsu Chemicals, Inc.

The above-mentioned prior art technologies, however, need further improvement in compatibility of an olefin elastomer with a polyester or polyamide resin.

It is an object of the present invention to provide a new thermoplastic resin composition which is light in weight and superior in heat resistance and has both of the characteristic properties of an olefin elastomer and a polyester or polyamide.

It is another object of the present invention to provide a process for producing a new thermoplastic resin composition which has both of the characteristic properties of an olefin elastomer and a polyester or polyamide.

The present invention provides a thermoplastic resin composition which comprises (a) a polyester or polyamide, (b1) an olefin elastomer modified with an unsaturated glycidyl compound represented by the formula (I) below, and (c) an olefin elastomer.

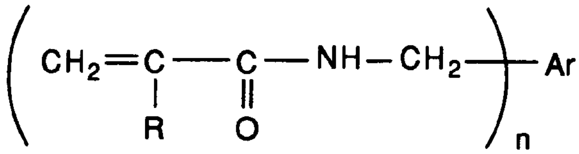

(I)

(where R denotes a hydrogen atom or $C_{1-6}$ alkyl group; Ar denotes a $C_{6-20}$ aromatic hydrocarbon group having at least one glycidyloxy group; and n is an integer of 1 to 4.)

The present invention also provides a thermoplastic resin composition which comprises (a) a polyester or polyamide, (b1) an olefin elastomer modified with an unsaturated glycidyl compound represented by the formula (I) above, and (d1) an olefin elastomer modified with an unsaturated carboxylic acid or a derivative thereof.

The present invention also provides a thermoplastic resin composition which comprises (a) a polyester or polyamide, (b1+b2) an olefin elastomer which is a mixture of 5-80 wt% of polyethylene and 95-20 wt% of olefin elastomer modified with an unsaturated glycidyl compound represented by the formula (I) above, and (c) an olefin elastomer.

The present invention also provides a thermoplastic resin composition which comprises (a) a polyester or polyamide, (b1+b2) an olefin elastomer which is a mixture of 5-80 wt% of polyethylene and 95-20 wt% of olefin elastomer modified with an unsaturated glycidyl compound represented by the formula (I) above, (c) an olefin elastomer, and (d2) a polyethylene modified with an unsaturated carboxylic acid or a derivative thereof.

The present invention also provides a thermoplastic resin composition which comprises (a) a polyester or polyamide and (b1') an olefin elastomer containing 20-95 wt% ethylene which is modified with an unsaturated glycidyl compound represented by the formula (I) above, wherein the polyester or polyamide and the modified olefin elastomer are characterized by $X < Y < 10X$ (where X denotes the melt flow rate (at 275°C under a load of 2.16 kg) of the former and Y denotes the melt flow rate (at 275°C under a load of 21.6 kg) of the latter), and the ratio of component (a) to component (b1') is defined by (a)/(b1') = 99/1 - 50/50 by weight.

The present invention also provides a process for producing a thermoplastic resin composition, said process comprising melt-mixing at 200-300°C (A) 50-99 wt% of (a) a polyester or polyamide and (B) 50-1 wt% of a modified olefin elastomer which is formed by melt-mixing at 150-300°C (c) 100 parts by weight of an olefin elastomer, (f) 0.2-10 parts by weight of an unsaturated glycidyl compound represented by the formula (I) above, and (g) 0.001-0.5 parts by weight of a radical polymerization catalyst, with the amount of the unsaturated glycidyl compound being 25-200 times that of the radical polymerization catalyst and the ratio of the amount of the unsaturated glycidyl compound (f1) which has been grafted to the olefin elastomer to the amount of the unsaturated glycidyl compound (f2) which has become polymerized without grafting to the olefin elastomer being (f1)/(f2) = 1-5 by weight.

The invention will now be explained in more detail in the following non-limitative description.

The present invention employs a polyester designated as (a1), which is a thermoplastic resin obtained usually by polycondensation of a saturated dicarboxylic acid and a saturated dihydric alcohol. It includes, for example, polyethylene terephthalate, polypropylene terephthalate, polytetramethylene terephthalate (polybutylene terephthalate), polyhexamethylene terephthalate, polycyclohexane-1,4-dimethylol terephthalate, and polyneopentyl terephthalate. Of these, polyethylene terephthalate and polybutylene terephthalate are preferable.

The aforesaid polyester should preferably be one which has an intrinsic viscosity [η] of 0.30-1.8 dl/g (calculated from the viscosity of solution in o-chlorophenol measured at 25°C) and contains terminal carboxyl groups in an amount of 10-200 meq/kg.

The polyethylene terephthalate should preferably be one which has an intrinsic viscosity [η] of 0.30-1.2 and contains terminal carboxyl groups in an amount of 10-200 meq/kg. Incidentally, it may be one in which the terephthalic acid moiety has alkyl or halogen substituent groups and the glycol moiety is composed of about 50 wt% each of ethylene glycol and other glycols such as 1,4-butylene glycol, propylene glycol, and hexamethylene glycol.

The polybutylene terephthalate should preferably be one which has an intrinsic viscosity [η] of 0.30-1.8 and contains terminal carboxyl groups in an amount of 10-200 meq/kg. Incidentally, it may be one in which the terephthalic acid moiety has alkyl or halogen substituent groups and the glycol moiety is composed of about 50 wt% each of 1,4-butylene glycol and other glycols such as ethylene glycol, propylene glycol, and hexamethylene glycol.

The present invention employs a polyamide designated as (a2), which is a polymeric compound having the acidamide bond (-CONH-) in the repeating unit. It may be classified into three categories according to the method of polymerization.

- ring opening polymerization of lactam.
- polycondensation of aminocarboxylic acid.
- polycondensation of diamine and dibasic acid.

It includes crystalline polyamides, amorphous polyamides, copolymer polyamides, and mixtures thereof. They may be produced from an aliphatic, alicyclic, or aromatic diamine (such as hexamethylene diamine, decamethylene diamine, dodecamethylene diamine, 2,2,4- or 2,4,4-trimethylhexa methylene diamine, 1,3- or 1,4-bis(aminomethyl)cyclohexane, bis(p-aminocyclohexylmethane), and m- or p-xylylenediamine) and an aliphatic, alicyclic, or aromatic dicarboxylic acid (such as adipic acid, suberic acid, sebacic acid, cyclohexanedicarboxylic acid, terephthalic acid, and isophthalic acid). They may also be produced from an aminocarboxylic acid (such as 6-aminocaproic acid, 11-aminoundecanoic acid, and 12-aminododecanoic acid). They may also be produced from a lactam (such as ε-caprolactam and ω-dodecalactam).

The typical examples of the aforesaid polyamides include nylon 6, nylon 66, nylon 610, nylon 612, nylon 11, nylon 12, aromatic nylons, and amorphous nylons. Of these, nylon 6 and nylon 66 are preferable which are superior in stiffness and heat resistance.

In the present invention, there are no specific restrictions on the molecular weight of the polyamide. Those polyamides having a relative viscosity ($\eta_r$) higher than 0.5, particularly higher than 2.0, are preferable because of their good mechanical strength. (The relative viscosity is measured according to JIS K6810 in which 98% sulfuric acid is used as a solvent.)

The present invention employs an olefin elastomer which is used as raw material of a modified olefin elastomers designated as (b1) and (d1) and an unmodified olefin elastomer designated as (c). The olefin elastomer denotes copolymer rubbers composed of ethylene and one or more than one α-olefin other than ethylene, such as propylene, 1-butene, 1-hexene, 4-methyl-1-pentene.

Examples of the aforesaid copolymer rubbers include ethylene-propylene copolymer rubber (EPR), ethylene-butene copolymer rubber (EBR), and ethylene-propylene-diene copolymer rubber (EPDM). EPDM may contain a non-conjugated diene (such as dicyclopenpadiene, 1,4-hexadiene, cyclooctadiene, and methylene-norbornene) or a conjugated diene (such as butadiene and isoprene).

The olefin elastomer should contain ethylene in an amount of 5-95 wt%, preferably 10-90 wt%. With an ethylene content less than 5 wt% or more than 95 wt%, the olefin elastomer will not exhibit the properties of elastomers. The olefin elastomer usually has a crystallinity lower than 40 wt%.

The ethylene-propylene copolymer rubber (EPR) used in the present invention is one in which the repeating unit derived from ethylene accounts for 50-80 mol%, preferably 30-40 mol%, and the repeating unit derived from propylene accounts for 20-50 mol%, preferably 30-40 mol%.

The EPR should have an MFR (at 230°C and 2.16 kg load) in the range of 0.01 to 50 g/10 min, preferably 0.5 to 30 g/10 min.

The ethylene-butene copolymer rubber (EBR) used in the present invention is one in which the repeating unit derived from ethylene accounts for 50-90 mol%, preferably 60-80 mol%, and the repeating unit derived from butene accounts for 10-50 mol%, preferably 20-40 mol%.

The EBR should have an MFR (at 230°C and 2.16 kg load) in the range of 0.01 to 50 g/10 min, preferably 0.5 to 30 g/10 min.

The ethylene-propylene-diene copolymer rubber (EPDM) used in the present invention is one in which the repeating unit derived from ethylene accounts for 40-70 mol%, preferably 50-60 mol%, the repeating unit derived from propylene accounts for 30-60 mol%, preferably 40-50 mol%, and the repeating unit derived from diene accounts for 1-10 mol%, preferably 3-6 mol%.

The EPDM should have an MFR (at 230°C and 2.16 kg load) in the range of 0.01 to 50 g/10 min, preferably 0.1 to 30 g/10 min.

In the present invention, the ethylene-propylene copolymer rubber (EPR), ethylene-butene copolymer rubber (EBR), and ethylene-propylene-diene copolymer rubber (EPDM) are basically composed of the aforesaid repeating units. However, they may be partly replaced with other repeating units derived from other α-olefins such as 4-methyl-pentene-1 in an amount less than 10 mol%.

The present invention employs a modified olefin elastomer designated as (b1) which is formed by modifying the aforesaid olefin elastomer with an unsaturated glycidyl compound, or a modified olefin elastomer designated as (d1) which is formed by modifying with an unsaturated carboxylic acid or a derivative thereof.

The unsaturated glycidyl compound used as a modifier may be any glycidyl compound which has in the molecule a glycidyloxy group and an unsaturated group copolymerizable with the olefin elastomer. It includes, for example, unsaturated glycidyl esters, unsaturated glycidyl ethers, and those compounds having an acrylamide group and an epoxy group as represented by the formula (I) below.

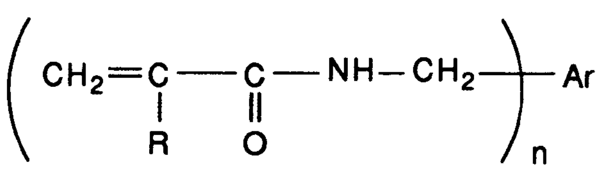

(I)

(where R denotes a hydrogen atom or a $C_{1-6}$ alkyl group; Ar denotes a $C_{6-20}$ aromatic hydrocarbon group having

at least one glycidyloxy group; and n denotes a integer of 1-4.)

Of those unsaturated glycidyl compounds represented by the formula (I), the one represented by the formula (II) below is preferable.

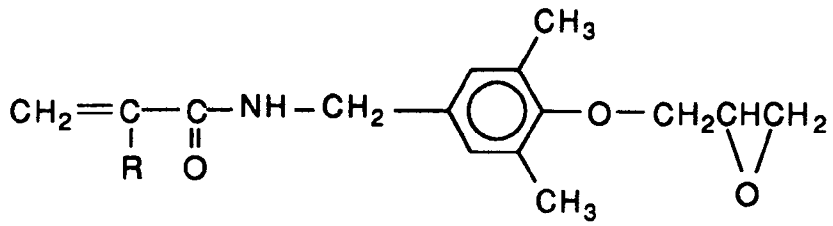

(II)

(where R is defined as above.)

The glycidyl compound such as this can be prepared by the process disclosed in, for example, U.S. Patent No. 4,709,062.

The unsaturated glycidyl ester and unsaturated glycidyl ether include glycidyl acrylate, glycidyl methacrylate (GMA), allylglycidyl ether, 2-methylallylglycidyl ether, and styrene-p-glycidyl ether. Of these, glycidyl methacrylate (GMA) is preferable.

The unsaturated carboxylic acid and derivative thereof are those which are copolymerizable with the olefin elastomer. They include, for example, unsaturated mono and dicarboxylic acids (such as acrylic acid, methacrylic acid, maleic acid, endo-bicyclo[2.2.1]-5-heptene-2,3-dicarboxylic acid (Endic acid), fumaric acid, tetrahydrophthalic acid, itaconic acid, citraconic acid, crotonic acid, and isocrotonic acid) and derivatives thereof in the form of acid halide, amide, imide, anhydride, and ester. The derivatives include, for example, malenyl chloride, maleimide, maleic anhydride, Endic anhydride, methyl acrylate, methyl methacrylate, citraconic anhydride, monomethyl maleate, and dimethyl maleate. Of these, the unsaturated dicarboxylic acids and derivative thereof are preferable, especially maleic acid and maleic anhydride are preferable.

The aforesaid modifiers are usually used alone; however, they may also be used in combination with one another.

The amount of the modifier for the modified olefin elastomer varies as follows depending on the kind of the olefin elastomer from which it is produced.

(i) The unsaturated glycidyl compound should be used in an amount of 0.01-30 wt%, preferably 0.1-10 wt%, for 100 parts by weight of the olefin elastomer. An amount less than 0.01 wt% is not enough to bring about the satisfactory modification. An amount in excess of 30 wt% leads to gelation that occurs at the time of blending with the polyester or polyamide, and gelation aggravates the moldability of the resulting composition.

(ii) The unsaturated carboxylic acid or a derivative thereof should be used in an amount of 0.01-10 wt%, preferably 0.1-5 wt%, for 100 parts by weight of the olefin elastomer. An amount less than 0.01 wt% is not enough to bring about the satisfactory modification. An amount in excess of 10 wt% leads to the deterioration of the modified olefin elastomer.

The modified olefin elastomer used in the present invention may be prepared by any known process, such as melt-mixing process and solution process.

The melt-mixing process consists of heating, melting, and mixing the olefin elastomer and modifier and an optional catalyst in an extruder or twin-screw mixer at about 170-300°C for 0.1-20 minutes.

The solution process consists of dissolving the starting materials in an organic solvent (such as xylene) and stirring the solution at about 90-200°C for 0.1-100 hours.

These modifying processes may employ a catalyst which is commonly used for radical polymerization. It includes peroxides (such as benzoyl peroxide, lauroyl peroxide, di-t-butyl peroxide, acetyl peroxide, t-butyl perbenzoate, dicumyl peroxide, perbenzoic acid, peracetic acid, t-butyl perpivalate, and 2,5-dimethyl-2,5-di-t-butyl peroxyhexyne) and azo compounds (such as azobisisobutyronitrile).

The catalyst should be used in an amount of 0.1-10 parts by weight for 100 parts by weight of the modifier. Incidentally, it is possible to add an antioxidant of hindered phenol type at the time of grafting reaction.

In the case where the present invention employs (b1) the olefin elastomer modified with the unsaturated glycidyl compound, the preferred modified olefin elastomer is one which is prepared by modifying EPR, EBR, or EPDM with the glycidyl compound represented by the formula (I) above, especially the one represented by the formula (II) above.

In the case where the present invention employs (d1) the olefin elastomer modified with the unsaturated carboxylic acid or a derivative thereof, the preferred modified olefin elastomer is one which is prepared by modifying EPR, EBR, or EPDM with the unsaturated dicarboxylic acid or a derivative thereof, especially such as maleic acid and Endic acid and anhydrides thereof.

The thermoplastic resin composition of the present invention may contain polyolefin modified with an unsaturated glycidyl compound. This modified polyolefin is designated as b2. Polyethylene is preferably used as the polyolefin. This polyethylene is a high-viscosity polyethylene, and the resulting modified polyethylene improve the pelletizability of the modified olefin elastomer.

The high-viscosity polyethylene is one which has an MFR (at 190°C, 2.16 kg load) lower-than 2 g/10 min, preferably 0.001-1.0 g/10 min. With an MFR higher than 2 g/10 min, it will aggravate the impact resistance of the resulting thermoplastic resin composition.

The high-viscosity polyethylene may also be one which is a copolymer of ethylene with an α-olefin (other than ethylene) in an amount less than 20 wt%. It has a density of 0.880-0.970 g/cm$^3$ (measured according to ASTM D1505). It includes low-density polyethylene, linear low-density polyethylene, and high-density polyethylene. The last one is preferable because of its balanced properties.

The amount of the polyethylene should be 5-80 wt%, preferably 10-70 wt%, for 100 wt% of the olefin elastomer.

With an amount in excess of 80 wt%, the resulting product lacks the properties of elastomer. With an amount less than 5 wt%, the resulting product is poor in pelletizability.

The thermoplastic resin composition of the present invention may be incorporated with polyethylene modified with an unsaturated carboxylic acid or a derivative thereof. This modified polyethylene is designated as d2. As in the case of the aforesaid component b2, this polyethylene may be low-density polyethylene, linear low-density polyethylene, or high-density polyethylene. The one having a melt index (at 190°C, 2.16 kg load) of 0.1-50 g/10 min and a density of 0.970-0.885 g/cm$^3$ (according to ASTM D1505) is preferable. It may also be a copolymer of ethylene with an α-olefin (other than ethylene) in an amount less than 20 wt%.

The modifier exemplified as the aforesaid component (d1) may be used. The modified polyethylene should be one which has an MFR (at 230°C, 2.16 kg load) of 0.01-1000 g/10 min and contains the modifier grafted in an amount of about 0.1-10 wt%.

The thermoplastic resin composition of the present invention is prepared by incorporating the component (a) properly with the aforesaid components (b1), (b2), (c), (d1), and (d2), as illustrated in the following.

A first example of the thermoplastic resin composition of the present invention is one which is composed of the components (a), (b1), and (c). In other words, it is a thermoplastic resin composition which is composed of (a) a polyester or polyamide, (b1) an olefin elastomer modified with an unsaturated glycidyl compound represented by the formula (I), and (c) an unmodified olefin elastomer. In this example, the ratio of the components (a), (b1), and (c) is such that (a)/{(b1)+(c)} = 70/30 - 2/98, preferably 60/40 - 10/90 (by weight), and the ratio of the components (b1) and (c) is such that (b1)/(c) = 95/5 - 5/95, preferably 10/90 - 90/10 (by weight). With an amount less than 5 wt%, the unmodified olefin elastomer (c) results in a composition having a poor yellowish appearance. With an amount less than 5 wt%, the unsaturated glycidyl compound-modified olefin elastomer (b1) does not fully produce its effect.

A second example of the thermoplastic resin composition of the present invention is one which is composed of the components (a), (b1), and (d1). In other words, it is a thermoplastic resin composition which is composed of (a) a polyester or polyamide, (b1) an olefin elastomer modified with an unsaturated glycidyl compound represented by the formula (I), and (d1) an olefin elastomer modified with an unsaturated carboxylic acid or a derivative thereof. In this example, the ratio of the components (a), (b1), and (d1) is such that (a)/{(b1)+(d1)} = 50/50 - 2/98, preferably 50/50 - 5/95 (by weight), and the ratio of the components (b1) and (d1) is such that (b1)/(d1) = 98/2 - 2/98, preferably 5/95 - 95/5 (by weight). If the ratio of the component (a) and the components (b1)+(d1) is less than 2/98 (by weight), the resulting composition is not improved in heat resistance because of insufficient polyester or polyamide. Conversely, if the ratio is more than 50/50, the resulting composition lacks the properties of elastomer because of insufficient modified olefin elastomer. On the other hand, if the ratio of the components (b1) and (d1) is less than 2/98 or more than 98/2 (by weight), the resulting composition does not have the improved physical properties because either of the modified olefin elastomer is not enough to increase the viscosity of the rubber phase.

A third example of the thermoplastic resin composition of the present invention is one which contains an easily pelletizable modified olefin elastomer composed of the components (b1) and (b2) which are formed by modification of a mixture of polyethylene and olefin elastomer with an unsaturated glycidyl compound. In other words, it is a thermoplastic resin composition which is composed of (a) a polyester or polyamide, (b1+b2) a mixture of 5-80 wt% polyethylene and 95-20 wt% olefin elastomer which is modified with an unsaturated glycidyl compound represented by the formula (I), and (c) an unmodified olefin elastomer. In this example, the ratio of the components (a), (b1+b2), and (c) is such that (a)/{(b1+b2)+(c)} = 98/2 - 30/70, preferably 95/5 - 40/60 (by weight), and the ratio of the components (b1+b2) and (c) is such that the former is more than 30

wt%, preferably more than 40 wt%. If the amount of the unmodified olefin elastomer is more than 70 wt% (or the amount of the modified elastomer is less than 30 wt%), the resulting composition does not produce the effect due to the modified polymer. If the ratio of the components (a) and (b1+b2)+(c) is less than 98/2 (by weight), the resulting composition does not produce the effect due to polyester or polyamide. If the ratio of the components (a) and (b1+b2)+(c) is more than 30/70 (by weight), the resulting composition is not improved in compatibility due to the modified olefin elastomer.

A fourth example of the thermoplastic resin composition of the present invention is one which contains an easily pelletizable modified olefin elastomer composed of the components (b1) and (b2) which are formed by modification of a mixture of polyethylene and olefin elastomer with an unsaturated glycidyl compound, and also contains a polyethylene modified with an unsaturated carboxylic acid or a derivative thereof. In other words, it is a thermoplastic resin composition which is composed of (a) a polyester or polyamide, (b1+b2) a mixture of 5-80 wt% polyethylene and 95-20 wt% olefin elastomer which is modified with an unsaturated glycidyl compound represented by the formula (I), (c) an unmodified olefin elastomer, and (d2) a polyethylene modified with an unsaturated carboxylic acid or a derivative thereof. In this example, the ratio of the components (a), (b1+b2), (c), and (d2) is such that (a)/{(b1+b2)+(c)+(d2)} = 98/2 - 30/70, preferably 95/5 - 40/60 (by weight), and the ratio of the components (b1+b2) and (c) is such that the former is more than 30 wt%, preferably more than 40 wt%, and the ratio of the components (b1+b2) and (d2) is such that (b1+b2)/(d2) = 98/2 - 2/98, preferably 95/5 - 5/95. If the amount of the unmodified olefin elastomer is more than 70 wt% (or the amount of the modified elastomer is less than 30 wt%), improvement in compatibility of the polyester or polyamide with the olefin elastomer is not achieved. If the ratio of the components (b1+b2) to (d2) is less than 98/2 by weight (or the amount of the modified polyethylene is less than 2 parts by weight), improvement in compatibility of the polyester or polyamide with the olefin elastomer is not achieved. If the amount of the modified polyethylene is more than 98 parts by weight, the resulting resin composition is poor in impact resistance and resilience due to insufficient olefin elastomer.

A fifth example of the thermoplastic resin composition of the present invention is one in which the components (a) and (b1) have mutually related viscosity. In other words, it is a composition which contains (a) a polyester or polyamide and (bl') an olefin elastomer (containing 20-95 wt% ethylene) modified with an unsaturated glycidyl compound represented by the formula (I), with the former having a melt flow rate X (at 275°C, 2.16 kg load) and the latter having a melt flow rate Y (at 275°C, 21.6 kg load), X and Y being defined by $X < Y < 10X$. The ratio of the components (a) and (b1') is such that (a)/(b1') = 99/1 - 50/50, preferably 95/5 - 60/40 (by weight). In this example, if $X \geqq Y$, the polyester or polyamide is poor in dispersion in the modified olefin elastomer and hence the resulting composition is poor in impact resistance. Conversely, if $Y \geqq 10X$, the modified olefin elastomer is liable to blocking, which hampers mixing. If the amount of the polyester or polyamide is more than 99 wt%, improvement in compatibility by the modified olefin rubber is not achieved. Conversely, with an amount less than 50 wt%, the resulting composition is poor in stiffness.

The thermoplastic resin composition of the present invention can be obtained by melt-mixing the aforesaid components.

The thermoplastic resin composition of the present invention may be incorporated with additional materials to enhance and improve its properties. They include fillers and reinforcing materials (such as glass fiber), heat stabilizers, light stabilizers, flame retardants, plasticizers, antistatic agents, foaming agents, and nucleators.

Melt-mixing may be accomplished continuously or batchwise by any known method that employs a Banbury mixer, Brabender, mixing roll, single-screw extruder, twin-screw extruder, or the like.

The mixing temperature should be 200-300°C, preferably 210-290°C. If the mixing temperature is lower than 200°C, the polyester and polyolefin elastomer will not mix completely. Conversely, mixing at higher than 300°C will impair the characteristic properties of the resin.

The order in which the components are mixed is not specifically restricted. In the case of the composition composed of components (a), (b1), and (c), there are the following mixing methods.

(i) By feeding the components (a), (b1), and (c) all at once to a batch-type mixer, Brabender, or single- or twin- screw extruder.

(ii) By feeding the components (a) and (b1) to an extruder and feeding the component (c) to the barrel at its intermediate point.

(iii) By feeding the components (b1) and (c) to an extruder and feeding the component (a) to the barrel at its intermediate point.

(iv) By feeding the components (a) and (c) to an extruder and feeding the component (b1) to the barrel at its intermediate point.

According to the present invention, the thermoplastic resin composition does not suffer degradation at the time of melt-mixing because the modified olefin elastomer contains the modifier in the form of oligomer which remains unreacted with the olefin elastomer.

That is, the present invention provides a process for producing a thermoplastic resin composition, said process comprising melt-mixing at 200-300°C (A) 50-99 wt% of (a) a polyester or polyamide and (B) 50-1 wt% of a modified olefin elastomer which is formed by melt-mixing at 150-300°C (c) 100 parts by weight of an olefin elastomer, (f) 0.2-10 parts by weight of an unsaturated glycidyl compound represented by the formula (I), and (g) 0.001-0.5 parts by weight of a radical polymerization catalyst, with the amount of the unsaturated glycidyl compound being 25-200 times that of the radical polymerization catalyst and the ratio of the amount of the unsaturated glycidyl compound (f1) which has been grafted to the olefin elastomer to the amount of the unsaturated glycidyl compound (f2) which has become polymerized without grafting to the olefin elastomer being (f1)/(f2) = 1-5 by weight.

It is possible to determine in the following manner the amount of the modifier (f1) which has been grafted and the amount of the modifier (f2) which has become polymerized in the modified olefin elastomer.

(1) Amount of the modifier which has been grafted:

The resulting modified olefin elastomer is dissolved in boiling xylene and it is then reprecipitated in acetone. This process permits the modifier (in the form of monomer and polymer) remaining ungrafted to the olefin elastomer to be extracted into acetone. The precipitated polymer is dried in vacuum and hot-pressed into a film about 50 μm thick. The film is examined by infrared spectrometry for absorbance at the peak (1650 $cm^{-1}$) due to the expansion and contraction of the carbonyl bond (C=O) in the modifier and absorbance at the peak (840 $cm^{-1}$) characteristic of isotactic polypropylene or at the peak (720 $cm^{-1}$) characteristic of polyethylene, EPR, or EBR. The amount of the modifier is determined by the ratio of the two absorbances and the previously prepared calibration curve. The thus obtained value corresponds to the amount of the modifier which has been grafted to the olefin elastomer. This value is converted into a weight ratio (A) in the modified olefin elastomer.

(2) Total amount of the modifier:

The resulting modified olefin elastomer is hot-pressed into a film (about 50 μm thick), and the film is examined by infrared spectrometry to determine the content of the modifier in the same manner as in (1). The thus obtained value means the total amount of the modifier which has been grafted to the olefin elastomer, has become polymerized without grafting, and has remained unreacted. This value is converted into a weight ratio (B) in the modified olefin elastomer.

(3) Amount of the modifier (monomer) remaining unreacted:

The resulting modified olefin elastomer is frozen with liquefied nitrogen and then crushed into 100-mesh powder. This powder is extracted with acetone for 24 hours using a Soxhlet apparatus. The extract is properly concentrated and the concentrate is examined by infrared spectrometry to determine the content of the modified in the same manner as in (1). The thus obtained value means the amount of the modifier (in the form of monomer) which remains unreactd in the modified olefin elastomer. This value is converted into a weight ratio (C) in the modified olefin elastomer.

(4) Amount of the modifier which has become polymerized:

The amount of the modifier (M) which has become polymerized in the modified olefin elastomer is calculated as follows:

$M = B - A - C.$

The invention will be described in more detail with reference to the following examples and comparative examples, which are not intended to restrict the scope of the invention.

<u>Examples 1 to 6 and Comparative Examples 1 to 7</u>

The raw materials and catalyst used are given below.

- Polyester
  Polybutylene terephthalate (PBT):
  "C 7000N" (from Teijin Ltd.) having an intrinsic viscosity [η] of 1.05 (measured at 25°C in o-chlorophenol)
- Polyolefin rubber
  Ethylene-propylene rubber (EPR):
  "PO180" (from Mitsui Petrochemical Industries, Ltd.) having a melt flow rate (MFR) of 6.0 g/10 min (at 230°C, 2.16 kg load)
- Radical polymerization catalyst
  POX: "Perhexyne 25B" (from Nippon Oil and Fats Co., Ltd.)
- Modified polyolefin rubber
  Modified ethylene-propylene rubber (modified EPR):
  Prepared from 100 parts by weight of ethylene-propylene rubber ("PO180" from Mitsui Petrochemical Industries, Ltd.) by melt-mixing with 0.03 parts by weight of organic peroxide (POX) ("Perhexyne 25B"

from Nippon Oil and Fats Co., Ltd.) and 3 parts by weight of an unsaturated glycidyl compound (AXE) represented by the formula (III) (from Kanegafuchi Chemical Industry Co., Ltd.) at 200°C in a single-screw extruder (30 mm in diameter and L/D = 23) running at 60 rpm.

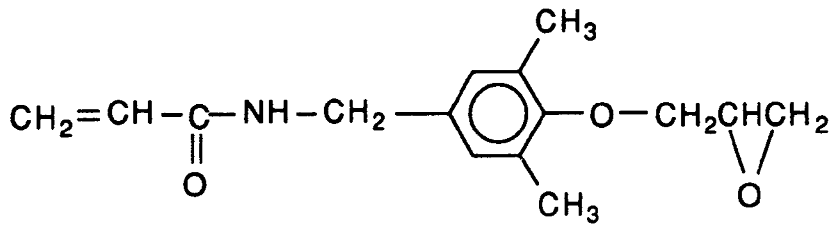

(III)

It has an AXE grafting ratio of 2.6 wt% and a melt flow rate (MFR) of 3.5 kg/10 min (at 230°C, 2.16 kg load).

The AXE grafting ratio was calculated as follows: (This procedure is used in the examples and comparative examples that follow.) The resulting modified olefin elastomer is dissolved in boiling xylene and it is then reprecipitated in methanol. The polymer precipitates are vacuum-dried and hot-pressed into a film about 50 μm thick. The film is examined by infrared spectrometry for absorbance at the peak (1648 $cm^{-1}$) due to the expansion and contraction of the carbonyl bond (C=O) in the modifier and absorbance at the peak (840 $cm^{-1}$) characteristic of isotactic polyethylene. The amount of the modifier is determined by the ratio of the two absorbances and the previously prepared calibration curve.

• Thermoplastic resin composition

The desired thermoplastic resin composition was prepared from the polyester (PBT), modified polyolefin rubber (modified EPR), and olefin rubber (EPR) by melt-mixing at 250°C in the ratio shown in Table 1 using a 45mm twin-screw extruder running at 200 rpm. The resulting mixture was finally pelletized.

The resulting thermoplastic resin composition was tested for Vicat softening point, tensile elongation at break, tension set, surface hardness, and yellowness index. The results are shown in Table 1.

Table 1

| Example No. | | Example 1 | 2 | 3 | 4 | 5 | 6 |
|---|---|---|---|---|---|---|---|
| Components* | | | | | | | |
| Polyester | (PBT) | 20 | 20 | 30 | 30 | 50 | 50 |
| Modified Polyolefine Rubber | (EPR) | 40 | 20 | 35 | 20 | 25 | 10 |
| Polyolefine Rubber | (EPR) | 40 | 60 | 35 | 50 | 25 | 40 |
| Properties | | | | | | | |
| Vicat Softening Point (°C) | | 59 | 58 | 69 | 67 | 73 | 75 |
| Tensile Elongation at Break (%) | | 345 | 340 | 350 | 348 | 334 | 339 |
| Tension Set (%) | | 8 | 8 | 7 | 7 | 6 | 6 |
| Surface Hardness (Shore D) | | 36 | 35 | 39 | 38 | 42 | 41 |
| Yellowness Index | | 2 | 1 | 2.5 | 1.3 | 2.7 | 1.2 |

*: % By weight

Table 1 (Continued)

| Example No. | | Comparative Example | | | | | | |
|---|---|---|---|---|---|---|---|---|
| | | 1 | 2 | 3 | 4 | 5 | 6 | 7 |
| **Components*** | | | | | | | | |
| Polyester | (PBT) | | 20 | 20 | 30 | 30 | 50 | 50 |
| Modified Polyolefine Rubber | (EPR) | | | 80 | | 70 | | 50 |
| Polyolefine Rubber | (EPR) | 100 | 80 | | 70 | | 50 | |
| **Properties** | | | | | | | | |
| Vicat Softening Point (°C) | | 52 | 53 | 60 | 53 | 69 | 55 | 73 |
| Tensile Elongation at Break(%) | | 280 | 34 | 349 | 32 | 348 | 23 | 336 |
| Tension Set (%) | | 10 | - | 8 | - | 7 | - | 6 |
| Surface Hardness (Shore D) | | 10 | 28 | 36 | 30 | 40 | 32 | 43 |
| Yellowness Index | | -2 | 0.4 | 8.6 | 0.8 | 9.2 | 1.5 | 11.6 |

*: % By weight

The following test methods were used to measure the physical properties shown in Table 1.

(1) Vicat softening point: according to ASTM D1525.

(2) Tensile elongation at break: according to JIS K6301.

(3) Tension set: according to JIS K6301.

(4) Surface hardness: according to ASTM D2240 (Shore D).

(5) Yellowness index: according to JIS K7103.

It is clear from Table 1 that as compared with the thermoplastic resin composition of the present invention which is composed of a polyester, olefin elastomer, and modified elastomer, the sample in Comparative Example 1 (which is composed solely of polyolefin (EPR)) and the samples in Comparative Examples 2, 4, and 6 (which are composed merely of polyester (PBT) and polyolefin (EPR)) are poorer in Vicat softening point, tensile elongation at break, and surface hardness, although they are good in yellowness index. By contrast, the samples in Comparative Examples 3, 5, and 7 (which are composed merely of polyester and modified polyolefin (modified EPR)) are poorer in yellowness index, although they are good in Vicat softening point, tensile elongation at break, and surface hardness.

It turns out that the thermoplastic resin composition of the present invention has a desirable Vicat softening point, tensile elongation at break, tension set, surface hardness, and yellowness index, which are well balanced.

Examples 7 to 12 and Comparative Examples 8 to 14

The same raw materials and catalyst as used in Example 1 to 6 were used, except that the polyester was replaced by a polyamide (nylon 6 "A1030BRL" (from Unitika Ltd.) having a relative viscosity ($\eta_r$) of 2.6, measured using 98% sulfuric acid as a solvent, according to JIS K6810).

- Thermoplastic resin composition

The desired thermoplastic resin composition was prepared from the polyamide (nylon 6), modified polyolefin rubber (modified EPR), and olefin rubber (EPR) by melt-mixing at 250°C in the ratio shown in Table 2 using a 45mm twin-screw extruder running at 200 rpm. The resulting mixture was finally pelletized.

The resulting thermoplastic resin composition was tested for Vicat softening point, tensile elongation at break, tension set, surface hardness, and yellowness index. The results are shown in Table 2.

Table 2

| | Example | | | | | |
|---|---|---|---|---|---|---|
| Example No. | 7 | 8 | 9 | 10 | 11 | 12 |
| **Components*** | | | | | | |
| Polyamido (Nylon 6) | 20 | 20 | 30 | 30 | 50 | 50 |
| Modified Polyolefine Rubber (EPR) | 40 | 20 | 35 | 20 | 25 | 10 |
| Polyolefine Rubber (EPR) | 40 | 60 | 35 | 50 | 25 | 40 |
| **Properties** | | | | | | |
| Vicat Softening Point (°C) | 60 | 58 | 71 | 69 | 75 | 74 |
| Tensile Elongation at Break(%) | 210 | 212 | 195 | 207 | 220 | 215 |
| Tension Set (%) | 8 | 8 | 7 | 7 | 6 | 7 |
| Surface Hardness (Shore D) | 30 | 29 | 35 | 34 | 38 | 36 |
| Yellowness Index | 2.2 | 1.2 | 2.4 | 1.3 | 2.2 | 1.1 |

*: % By weight

Table 2 (Continued)

| Example No. | Comparative Example | | | | | | |
|---|---|---|---|---|---|---|---|
| | 8 | 9 | 10 | 11 | 12 | 13 | 14 |
| **Components*** | | | | | | | |
| Polyamido (Nylon 6) | | 20 | 20 | 30 | 30 | 50 | 50 |
| Modified Polyolefine Rubber (EPR) | | | 80 | | 70 | | 50 |
| Polyolefine Rubber (EPR) | 100 | 80 | | 70 | | 50 | |
| **Properties** | | | | | | | |
| Vicat Softening Point (°C) | 52 | 54 | 60 | 56 | 71 | 58 | 76 |
| Tensile Elongation at Break(%) | 280 | 33 | 214 | 31 | 225 | 24 | 218 |
| Tension Set (%) | 10 | - | 8 | - | 7 | - | 7 |
| Surface Hardness (Shore D) | 10 | 29 | 30 | 29 | 34 | 31 | 36 |
| Yellowness Index | -2 | 0.5 | 15.3 | 1.1 | 18.9 | 1.2 | 22.7 |

*: % By weight

The same test methods as in Table 1 were used to measure the physical properties shown in Table 2.

It is clear from Table 2 that as compared with the thermoplastic resin composition of the present invention which is composed of a polyamide, olefin elastomer, and modified elastomer, the sample in Comparative Example 8 (which is composed solely of polyolefin (EPR)) and the samples in Comparative Examples 9, 10, and 13 (which are composed merely of polyamide (nylon 6) and polyolefin (EPR)) are poorer in Vicat softening point,

tensile elongation at break, and surface hardness, although they are good in yellowness index. By contrast, the samples in Comparative Examples 10, 12, and 14 (which are composed merely of polyamide and modified polyolefin (modified EPR)) are poorer in yellowness index, although they are good in Vicat softening point, tensile elongation at break, and surface hardness.

It turns out that the thermoplastic resin composition of the present invention has a desirable Vicat softening point, tensile elongation at break, tension set, surface hardness, and yellowness index, which are well balanced.

Examples 13 to 23 and Comparative Examples 15 to 22

The raw materials and additives used are given below.

- Polyester
  (1) Polyethylene terephthalate (PET):
  "TR4550BH" (from Teijin Ltd.) having an intrinsic viscosity [η] of 0.70 (measured in o-chlorophenol)
  (2) Polybutylene terephthalate (PBT):
  "TRB-K" (from Teijin Ltd.) having an intrinsic viscosity [η] of 0.70 (measured in o-chlorophenol)
- Polyolefin rubber
  Ethylene-propylene rubber (EPR):
  "PO180" (from Mitsui Petrochemical Industries, Ltd.) having a melt flow rate (MFR) of 6.0 g/10 min (at 230°C, 2.16 kg load)
- Modifying monomers
  (1) AXE (from Kanegafuchi Chemical Industry Co., Ltd.)
  (2) MAH (maleic anhydride)
- Polyester-ether thermoplastic elastomer (PEsE1):
  "P280B" (from Toyo Boseki Kogyo Co., Ltd.) having a melt flow rate (MFR) of 18.0 g/10 min (at 230°C, 2.16 kg load)
- Polyolefin thermoplastic elastomer (POE1):
  "TPE1500" (from Sumitomo Chemical Co., Ltd.) having a melt flow rate (MFR) of 0.1 g/10 min (at 230°C, 2.16 kg load)
- Modified polyolefin rubber
  (1) AXE-modified polyolefin rubber (AXE-EPR):
  Prepared from 100 parts by weight of ethylene-propylene rubber (having a melt flow rate (MFR) of 6.0 g/10 min at 230°C and 2.16 kg load) by dry-blending with 3 parts by weight of AXE and 0.03 parts by weight of organic peroxide ("Perhexyne 25B" from Nippon Oil and Fats Co., Ltd.), followed by melt-mixing at 200°C in a 65mm single-screw extruder running at 60 rpm. It has a melt flow rate (MFR) of 2.8 g/10 min (at 230°C, 2.16 kg load) and an AXE grafting ratio of 2.6 wt%.
  (2) MAH-modified polyolefin rubber (MAH-EPR):
  Prepared from 100 parts by weight of ethylene-propylene rubber (having a melt flow rate (MFR) of 6.0 g/10 min at 230°C and 2.16 kg load) by dry-blending with 1 part by weight of MAH and 0.1 parts by weight of organic peroxide ("Perhexyne 25B" from Nippon Oil and Fats Co., Ltd.), followed by melt-mixing at 200°C in a 65mm single-screw extruder running at 60 rpm. It has a melt flow rate (MFR) of 4.2 g/10 min (at 230°C, 2.16 kg load) and an MAH grafting ratio of 0.6 wt%.
  Incidentally, the MAH grafting ratio was calculated in the same manner as in the case of AXE-modified EPR in Examples 1 to 6, except that the peak at 1780 $cm^{-1}$ due to the expansion and contraction of the C=O bond in the MAH was used as the reference.
- Thermoplastic resin composition
  The desired thermoplastic resin composition was prepared from the polyester (PET or PBT), olefin elastomer (EPR), AXE-modified olefin elastomer (AXE-EPR), and MAH-modified olefin elastomer (MAH-EPR) by dry-blending in a Henschel mixer in the ratio shown in Table 3, followed by melt-mixing in a 45mm twin-screw extruder (L/D = 30) running at 200 rpm. The resulting mixture was finally pelletized. The melt-mixing temperature was 280°C for PET and 250°C for PBT.

The resulting thermoplastic resin composition was injection molded, and the molded products were tested for specific gravity, Vicat softening point, surface hardness, tension set, and tensile elongation at break. The results are shown in Table 3.

Table 3

| Example No. | | Example 13 | 14 | 15 | 16 | 17 | 18 | 19 | 20 |
|---|---|---|---|---|---|---|---|---|---|
| **Components*** | | | | | | | | | |
| Polyester | PBT | 10 | 10 | 20 | 20 | 20 | 20 | 20 | 20 |
| | PET | | | | | | | | |
| Modified Polyolefine Rubber | AXE-EPR | 50 | 70 | 50 | 50 | 40 | 20 | 10 | 10 |
| | MAH-EPR | 40 | 20 | 30 | 20 | 40 | 40 | 70 | 30 |
| Polyolefine Rubber | EPR | | | | 10 | | | | 40 |
| Polyester-Ethel Thermoplastic Elastomer | PEsE1 | | | | | | | | |
| Polyolefine Thermoplastic Elastomer | POE1 | | | | | | | | |
| **Properties** | | | | | | | | | |
| Specific Gravity | | 0.95 | 0.95 | 0.98 | 0.98 | 0.98 | 0.98 | 0.98 | 0.98 |
| Vicat Softening Point (°C) | | 180 | 183 | 190 | 189 | 188 | 185 | 187 | 190 |
| Tension Set (%) | | 15 | 10 | 13 | 14 | 13 | 11 | 12 | 10 |
| Surface Hardness (Shore D) | | 27 | 27 | 35 | 35 | 35 | 35 | 35 | 35 |
| Tensile Elongation at Break(%) | | 600 | 700 | 650 | 600 | 660 | 630 | 620 | 600 |

*: Part by weight

Table 3 (Continued)

| | | Example | | | Comparative Example | | | | |
|---|---|---|---|---|---|---|---|---|---|
| Example No. | | 21 | 22 | 23 | 15 | 16 | 17 | 18 | 19 |
| <u>Components</u>*1 | | | | | | | | | |
| Polyester | PBT | | 30 | 50 | 100 | | | | 20 |
| | PET | 20 | | | | 100 | | | |
| Modified Polyolefine Rubber | AXE-EPR | 50 | 50 | 40 | | | | | |
| | MAH-EPR | 30 | 20 | 10 | | | | | 80 |
| Polyolefine Rubber | EPR | | | | | | | | |
| Polyester-Ethel Thermoplastic Elastomer | PEsEl | | | | | | 100 | | |
| Polyolefine Thermoplastic Elastomer | POEl | | | | | | | 100 | |
| <u>Properties</u> | | | | | | | | | |
| Specific Gravity | | 0.99 | 1.04 | 1.15 | 1.31 | 1.33 | 1.26 | 0.88 | 0.98 |
| Vicat Softening Point (°C) | | 207 | 200 | 210 | 220 | 250 | 199 | 52 | 41 |
| Tension Set (%) | | 15 | 20 | 27 | 97 | -*2 | 40 | 10 | -*2 |
| Surface Hardness (Shore D) | | 37 | 42 | 51 | 110 | 120 | 68 | 10 | 30 |
| Tensile Elongation at Break(%) | | 480 | 520 | 460 | 150 | 70 | 500 | 280 | 53 |

*1: Part by weight
*2: Unmeaurable because tensile elongation at break is lower than 100%

Table 3 (Continued)

| Example No. | | Comparative Example 20 | Comparative Example 21 | Comparative Example 22 |
|---|---|---|---|---|
| **Components*1** | | | | |
| Polyester | PBT | 20 | 20 | |
| | PET | | | 20 |
| Modified Polyolefine Rubber | AXE-EPR | 80 | | 80 |
| | MAH-EPR | | | |
| Polyolefine Rubber | EPR | | 80 | |
| Polyester-Ethel Thermoplastic Elastomer | PEsEl | | | |
| Polyolefine Thermoplastic Elastomer | POEl | | | |
| **Properties** | | | | |
| Specific Gravity | | 0.98 | 0.98 | 0.99 |
| Vicat Softening Point (°C) | | 42 | 40 | 43 |
| Tension Set (%) | | 8 | -*2 | 15 |
| Surface Hardness (Shore D) | | 37 | 28 | 38 |
| Tensile Elongation at Break(%) | | 350 | 34 | 140 |

*1: Part by weight
*2: Unmeasurable because tensile elongation at break is lower than 100%

The following test methods were used to measure the physical properties shown in Table 3.

(1) Specific gravity: according to JIS K6911.

(2) Vicat softening point: according to ASTM D1525.

(3) Surface hardness (23°C): according to ASTM D2240 (Shore D).

(4) Tension set (23°C): according to JIS K6301.

(5) Tensile elongation at break: according to JIS K6301.

It is clear from Table 3 that the sample in Comparative Example 21 (which is composed of polyester and unmodified olefin elastomer) has almost the same softening point as the commercial polyolefin thermoplastic elastomer containing no polyester in Comparative Example 18. This contrasts with Comparative Examples 15 and 16 in which the effect of polyester in the improvement of heat resistance is noticed. In addition, the sample in Comparative Example 21 lacks the properties of elastomers as indicated by the low tensile elongation at break and the unmeasurable tension set. This suggests the poor compatibility of polyester and olefin elastomer.

The samples in Comparative Examples 20 and 22, in which the modified olefin elastomer is composed of one polyester and AXE-modified olefin elastomer, and the sample in Comparative Example 19, which is composed of polyester and MAH-modified olefin elastomer, have a low softening point, although the former samples are slightly improved in the properties of elastomer. The sample in Comparative Example 19, which contains the MAH-modified olefin elastomer, is as poor in all properties as the sample in Comparative Example 21, which contains the unmodified olefin elastomer. This suggests the poor compatibility of polyester and modified olefin elastomer.

By contrast, the thermoplastic elastomer composition of the present invention, which contains an olefin elastomer modified with an unsaturated glycidyl compound and an olefin elastomer modified with an unsaturated carboxylic acid or a derivative thereof, is superior in softening point, surface hardness, tension set, and tensile elongation at break to the commercial polyolefin thermoplastic elastomer containing no polyester in Comparative Example 18, the composition in Comparative Example 21 which is composed of polyester and unmodified olefin elastomer, the composition in Comparative Examples 20 and 22 which is composed of polyester and AXE-modified olefin elastomer, and the composition in Comparative Example 19 which is composed of polyester and MAH-modified olefin elastomer. It has balanced properties and is greatly improved in softening point. In addition, it has a lower specific gravity and a much better tension set than the polyester-polyether thermoplastic elastomer in Comparative Example 17.

Examples 24 to 35 and Comparative Examples 23 to 33

The raw materials and additives used are given below.

- Polyamide
  (1) Nylon 6 (Ny 6):
  "A1030BRL" (from Unitika Ltd.)
  (2) Nylon 66 (Ny 66):
  "Amiran 3001N" (from Toray Industries, Inc.)
  (3) Amorphous nylon (AmNy):
  "XE3038" (from Emusu Co., Ltd.)
- Polyolefin rubber
  (1) Ethylene-propylene rubber (EPR):
  "PO180" (from Mitsui Petrochemical Industries, Ltd.) having a melt flow rate (MFR) of 6.0 g/10 min (at 230°C, 2.16 kg load)
  (2) Ethylene-butene rubber (EBR):
  "EBM2041P" (from Japan Synthetic Rubber Co., Ltd.) having a melt flow rate (MFR) of 5.0 g/10 min (at 230°C, 2.16 kg load)
- Modifying monomers
  (1) AXE (from Kanegafuchi Chemical Industry Co., Ltd.)
  (2) MAH (maleic anhydride)
- Polyamide thermoplastic elastomer (PAE1):
  "Daiamide E62" (from Daicel-HAls Co., Ltd.)
- Polyolefin thermoplastic elastomer (POE1):
  "TPE1500" (from Sumitomo Chemical Co., Ltd.) having a melt flow rate (MFR) of 0.1 g/10 min (at 230°C, 2.16 kg load)
- Modified polyolefin rubber
  (1) AXE-modified ethylene-propylene rubber (AXE-EPR):
  The same one as used in Example 13-24.
  (2) AXE-modified ethylene-butene rubber (AXE-EBR):
  Prepared from 100 parts by weight of ethylene-butene rubber (having a melt flow rate (MFR) of 6.0 g/10 min at 230°C and 2.16 kg load) by dry-blending with 3 parts by weight of AXE and 0.03 parts by weight of organic peroxide ("Perhexyne 25B" from Nippon Oil and Fats Co., Ltd.), followed by melt-mixing at 200°C in a 65mm single-screw extruder running at 60 rpm. It has a melt flow rate (MFR) of 3.2 g/10 min (at 230°C, 2.16 kg load) and an AXE grafting ratio of 2.1 wt%.
  (3) MAH-modified ethylene-propylene rubber (MAH-EPR):
  Prepared from 100 parts by weight of ethylene-propylene rubber (having a melt flow rate (MFR) of 6.0 g/10 min at 230°C and 2.16 kg load) by dry-blending with 1 part by weight of MAH and 0.1 parts by weight of organic peroxide ("Perhexyne 25B" from Nippon Oil and Fats Co., Ltd.), followed by melt-mixing at 200°C in a 65 mm single-screw extruder running at 60 rpm. It has a melt flow rate (MFR) of 3.1 g/10 min (at 230°C, 2.16 kg load) and an MAH grafting ratio of 0.6 wt%.

(4) MAH-modified ethylene-butene rubber (MAH-EBR):
Prepared from 100 parts by weight of ethylene-butene rubber (having a melt flow rate (MFR) of 7.0 g/10 min at 230°C and 2.16 kg load) by dry-blending with 1 part by weight of MAH and 0.1 parts by weight of organic peroxide ("Perhexyne 25B" from Nippon Oil and Fats Co., Ltd.), followed by melt-mixing at 200°C in a 65 mm single-screw extruder running at 60 rpm. It has a melt flow rate (MFR) of 3.7 g/10 min (at 230°C, 2.16 kg load) and an MAH grafting ratio of 0.7 wt%.

- Thermoplastic resin composition

  The desired thermoplastic resin composition was prepared from the polyamide (Ny 6, Ny 66, or AmMy), olefin elastomer (EPR or EBR), AXE-modified olefin elastomer (AXE-EPR or AXE-EBR), and MAH-modified olefin elastomer (MAH-EPR or MAH-EBR) by dry-blending in a Henschel mixer in the ratio shown in Table 4, followed by melt-mixing at 280°C in a 45 mm twin-screw extruder (L/D = 30) running at 200 rpm. The resulting mixture was finally pelletized.

The resulting thermoplastic elastomer composition was injection molded, and the molded products were tested for specific gravity, Vicat softening point, surface hardness, tension set, and tensile elongation at break. The results are shown in Table 4.

Table 4

| Example No. | | Example 24 | 25 | 26 | 27 | 28 | 29 | 30 | 31 |
|---|---|---|---|---|---|---|---|---|---|
| **Components*** | | | | | | | | | |
| Polyamide | (Ny6) | 10 | 20 | 20 | 20 | 20 | 20 | | |
| | (Ny66) | | | | | | | 20 | |
| | (AmNy) | | | | | | | | 20 |
| Modified Polyolefine Rubber | (AXE-EPR) | 80 | 70 | 40 | 10 | 40 | | 40 | 10 |
| | (AXE-EBR) | | | | | | 40 | | |
| | (MAH-EPR) | 10 | 10 | 40 | 70 | 20 | | 40 | 70 |
| | (MAH-EBR) | | | | | | 40 | | |
| Polyolefine Rubber | (EPR) | | | | | 20 | | | |
| | (EBR) | | | | | | | | |
| Polyamide Thermoplastic Elastmer | (PAE1) | | | | | | | | |
| Polyolefine Thermoplastic Elastomer | (POE1) | | | | | | | | |
| **Properties** | | | | | | | | | |
| Specific Gravity | | 0.91 | 0.93 | 0.93 | 0.93 | 0.93 | 0.93 | 0.93 | 0.94 |
| Vicat Softening Point (°C) | | 185 | 193 | 194 | 200 | 197 | 201 | 210 | 197 |
| Tension Set (%) | | 4 | 7 | 11 | 10 | 12 | 10 | 8 | 8 |
| Surface Hardness (Shore D) | | 29 | 32 | 32 | 32 | 32 | 32 | 32 | 34 |
| Tensile Elongation at Break | | 750 | 704 | 710 | 725 | 702 | 695 | 733 | 728 |

*: Part by weight

Table 4 (Continued)

| | | Example | | | | Comparative Example | | | |
|---|---|---|---|---|---|---|---|---|---|
| Example No. | | 32 | 33 | 34 | 35 | 23 | 24 | 25 | 26 |
| **Components*1** | | | | | | | | | |
| Polyamide | (Ny6) | 30 | 30 | 50 | | 100 | | | |
| | (Ny66) | | | | 50 | | 100 | | |
| | (AmNy) | | | | | | | 100 | |
| Modified Polyolefine Rubber | (AXE-EPR) | 30 | 40 | 20 | 20 | | | | |
| | (AXE-EBR) | | | | | | | | |
| | (MAH-EPR) | 40 | 30 | 30 | 30 | | | | |
| | (MAH-EBR) | | | | | | | | |
| Polyolefine Rubber | (EPR) | | | | | | | | |
| | (EBR) | | | | | | | | |
| Polyamide Thermoplastic Elastmer | (PAE1) | | | | | | | | 100 |
| Polyolefine Thermoplastic Elastomer | (POE1) | | | | | | | | |
| **Properties** | | | | | | | | | |
| Specific Gravity | | 0.96 | 0.96 | 0.99 | 0.99 | 1.08 | 1.08 | 1.10 | 1.02 |
| Vicat Softening Point (°C) | | 208 | 210 | 216 | 245 | 220 | 260 | 230 | 175 |
| Tension Set (%) | | 14 | 14 | 17 | 17 | -*2 | -*2 | -*2 | 25 |
| Surface Hardness (Shore D) | | 41 | 41 | 48 | 49 | 115 | 115 | 120 | 62 |
| Tensile Elongation at Break | | 642 | 647 | 593 | 557 | 25 | 37 | 53 | 340 |

*1: Part by weight
*2: Unmeaurable because tensile elongation at break is lower than 100%

Table 4 (Continued)

| Example No. | | Comparative Example 27 | 28 | 29 | 30 | 31 | 32 | 33 |
|---|---|---|---|---|---|---|---|---|
| **Components*1** | | | | | | | | |
| Polyamide | (Ny6) | | 20 | 20 | 20 | 20 | 20 | 20 |
| | (Ny66) | | | | | | | |
| | (AmNy) | | | | | | | |
| Modified Polyolefine Rubber | (AXE-EPR) | | | | 80 | | | |
| | (AXE-EBR) | | | | | 80 | | |
| | (MAH-EPR) | | | | | | 80 | |
| | (MAH-EBR) | | | | | | | 80 |
| Polyolefine Rubber | (EPR) | | 80 | | | | | |
| | (EBR) | | | 80 | | | | |
| Polyamide Thermoplastic Elastmer | (PAE1) | | | | | | | |
| Polyolefine Thermoplastic Elastomer | (POE1) | 100 | | | | | | |
| **Properties** | | | | | | | | |
| Specific Gravity | | 0.88 | 0.93 | 0.93 | 0.93 | 0.93 | 0.93 | 0.93 |
| Vicat Softening Point (°C) | | 52 | 54 | 54 | 62 | 73 | 63 | 70 |
| Tension Set (%) | | 10 | -*2 | -*2 | 10 | 20 | -*2 | -*2 |
| Surface Hardness (Shore D) | | 10 | 25 | 25 | 32 | 32 | 32 | 32 |
| Tensile Elongation at Break | | 280 | 33 | 41 | 240 | 200 | 60 | 61 |

*1: Part by weight

*2: Unmeaurable because tensile elongation at break is lower than 100%

The same test methods as in Table 3 were used.

It is clear from Table 4 that the samples in Comparative Examples 28 and 29 (which are composed of polyamide and unmodified olefin elastomer) have almost the same softening point as the commercial polyolefin thermoplastic elastomer containing no polyamide in Comparative Example 27. This contrasts with Comparative Examples 23 to 25 in which the effect of polyamide in the improvement of heat resistance is noticed. In addition, the samples in Comparative Example 28 and 29 lack the properties of elastomer as indicated by the low tensile elongation at break and the unmeasurable tension set. This suggests the poor compatibility of polyamide and olefin elastomer.

The samples in Comparative Examples 30 and 31, in which the modified olefin elastomer is composed of one polyamide and AXE-modified olefin elastomer, and the samples in Comparative Examples 32 and 33, which are composed of polyamide and MAH-modified olefin elastomer, have a low softening point, although the former samples are slightly improved in the properties of elastomer. The samples in Comparative Examples 32 and 33, which contain the MAH-modified olefin elastomer, are as poor in all properties as the samples in Comparative Examples 28 and 29, which contain the unmodified olefin elastomer. This suggests the poor compatibility of polyamide and modified olefin elastomer.

By contrast, the thermoplastic elastomer composition of the present invention, which contains an olefin elastomer modified with an unsaturated glycidyl compound and an olefin elastomer modified with an unsaturated carboxylic acid or a derivative thereof, is superior in softening point, surface hardness, tension set, and tensile elongation at break to the commercial polyolefin thermoplastic elastomer containing no polyamide in Comparative Example 27, the compositions in Comparative Examples 28 and 29 which are composed of polyamide and unmodified olefin elastomer, the compositions in Comparative Examples 30 and 31 which are composed of polyamide and AXE-modified olefin elastomer, and the compositions in Comparative Examples 32 and 33 which are composed of polyamide and MAH-modified olefin elastomer. It has balanced properties and is greatly improved in softening point. In addition, it has a lower specific gravity and a better tension set than the polyamide thermoplastic elastomer in Comparative Example 26.

Examples 34 to 42 and Comparative Examples 36 to 43

The raw materials and catalyst used are given below.

- Polyester
  Polybutylene terephthalate (PBT):
  "C 7000N" (from Teijin Ltd.) having an intrinsic viscosity [η] of 1.05 (measured at 25°C in o-chlorophenol)
- Polyethylene terephthalate (PET):
  "TR 4550BH" (from Teijin Ltd.) having an intrinsic viscosity [η] of 0.70 (measured at 25°C in o-chlorophenol)
- Polyolefin rubber
  Ethylene-propylene rubber (EPR):
  "PO180" (from Mitsui Petrochemical Industries, Ltd.) having a melt flow rate (MFR) of 6.0 g/10 min (at 230°C, 2.16 kg load)
- Polyolefin
  High-density polyethylene (HDPE-1):
  "B 5032" (from Tonen Chemical Co., Ltd.) having a melt flow rate (MFR) of 0.3 g/10 min (at 190°C, 2.16 kg load).
- High-density polyethylene (HDPE-2):
  "J 6311" (from Tonen Chemical Co., Ltd.) having a melt flow rate (MFR) of 20 g/10 min (at 190°C, 2.16 kg load).
- Radical polymerization catalyst
  POX: "Perhexyne 25B" (from Nippon Oil and Fats Co., Ltd.)
- Modified polyolefin rubber
  (1) Modified ethylene-propylene rubber (modified EPR-1):
  Prepared from 80 parts by weight of ethylene-propylene rubber (EPR) and 20 parts by weight of HDPE-1 (MFR = 0.3 g/10 min) by dry-blending with 0.03 parts by weight of organic peroxide (POX: "Perhexyne 25B") and 3 parts by weight of AXE (from Kanegafuchi Chemical Industry Co., Ltd.), followed by melt-mixing at 200°C in a single-screw extruder (30 mm in diameter and L/D = 25) running at 60 rpm. The mixture was finally pelletized. It has an AXE grafting ratio of 2.3 wt% and a melt flow rate (MFR) of 2.9 g/10 min (at 230°C, 2.16 kg load). It is good in pelletizability.
  The pelletizability is rated as good if the composition is capable of pelletizing stably over one hour by strand cutting; otherwise, it is rated as poor. This criteria are applicable hereinafter.

(2) Modified ethylene-propylene rubber (modified EPR-2):
Prepared from 80 parts by weight of ethylene-propylene rubber and 20 parts by weight of HDPE-2 (MFR = 20 g/10 min) by dry-blending with 0.03 parts by weight of POX and 3 parts by weight of AXE at 200°C in a single-screw extruder (30 mm in diameter and L/D = 25) running at 60 rpm. The mixture was finally pelletized. It has an AXE grafting ratio of 2.5 wt% and a melt flow rate (MFR) of 3.1 g/10 min (at 230°C, 2.16 kg load). It is good in pelletizability.
(3) Modified ethylene-propylene rubber (modified EPR-3):
Prepared from 100 parts by weight of ethylene-propylene rubber by dry-blending with 0.03 parts by weight of POX and 3 parts by weight of AXE at 200°C in a single-screw extruder (30 mm in diameter and L/D = 25) running at 60 rpm. The mixture was finally pelletized. It has an AXE grafting ratio of 2.6 wt% and a melt flow rate (MFR) of 3.5 g/10 min (at 230°C, 2.16 kg load). It is poor in pelletizability.

- Thermoplastic resin composition

The desired thermoplastic resin composition was prepared from the polyester (PBT or PET), modified polyolefin rubber (modified EPR-1, modified EPR-2, or modified EPR-3), and olefin rubber (EPR) by dry-blending in the ratio shown in Table 5, followed by melt-mixing at 250°C in a twin-screw extruder (45 mm in diameter and L/D = 30) running at 200 rpm. (The melt-mixing temperature was 280°C in the case where the polyester is PET.) The resulting mixture was finally pelletized. The pellets were injection molded into test pieces. Using these test pieces, the thermoplastic resin composition was tested for flexural modulus, Izod impact strength, and tensile elongation at break. The results are shown in Table 5.

Table 5

| Example No. | | Example 36 | 37 | 38 | 39 | 40 | 41 | 42 | 43 |
|---|---|---|---|---|---|---|---|---|---|
| **Components*** | | | | | | | | | |
| Polyester | (PBT) | 90 | 80 | 80 | 70 | 70 | | | |
| | (PET) | | | | | | 90 | 80 | 70 |
| Polyolefine Rubber | (EPR) | | | 10 | | 10 | | | |
| Modified Polyolefine Rubber | (Modified EPR(1)) | 10 | 20 | 10 | 30 | 20 | 10 | 20 | 30 |
| | (Modified EPR(2)) | | | | | | | | |
| | (Modified EPR(3)) | | | | | | | | |
| **Properties** | | | | | | | | | |
| Flexural Modulus ($kgf/cm^2$) | (23°C) | 22500 | 21300 | 20900 | 19400 | 19300 | 23100 | 22000 | 20400 |
| Izod Impact Strength (kgf cm/cm) | (23°C) | 19.9 | 58.6 | 56.2 | 82.5 | 81.4 | 16.8 | 46.0 | 59.4 |
| | (-30°C) | 6.2 | 24.5 | 24.1 | 43.2 | 39.7 | 5.5 | 14.5 | 25.1 |
| Tensile Elongation at Break (%) | (23°C) | 285 | 340 | 330 | 390 | 370 | 169 | 245 | 310 |

*: Part by weight

Table 5 (Continued)

| Example No. | | Comparative Exapmle 34 | 36 | 37 | 38 | 39 | 40 | 41 | 42 |
|---|---|---|---|---|---|---|---|---|---|
| **Components*** | | | | | | | | | |
| Polyester | (PBT) | 100 | | 80 | 80 | 80 | | | |
| | (PET) | | 100 | | | | 80 | 80 | 80 |
| Polyolefine Rubber | (EPR) | | | 20 | | | 20 | | |
| Modified Polyolefine Rubber | (Modified EPR(1)) | | | | | | | | |
| | (Modified EPR(2)) | | | | | 20 | | | 20 |
| | (Modified EPR(3)) | | | | 20 | | | 20 | |
| **Properties** | | | | | | | | | |
| Flexural Modulus ($kgf/cm^2$) | (23°C) | 23400 | 24200 | 20300 | 20500 | 21100 | 20800 | 21100 | 22100 |
| Izod Impact Strength (kgf cm/cm) | (23°C) | 3.6 | 2.8 | 5.1 | 58.6 | 53.4 | 3.9 | 45.2 | 41.3 |
| | (-30°C) | 3.3 | 1.9 | 3.4 | 25.3 | 15.6 | 3.0 | 12.8 | 6.7 |
| Tensile Elongation at Break (%) | (23°C) | 150 | 68 | 35 | 290 | 150 | 21 | 162 | 113 |

*: Part by weight

The following test methods were used to measure the physical properties shown in Table 5.

(1) Flexural modulus: according to JIS K7203 (at 23°C).
(2) Izod impact strength: according to JIS K7110 (with a V-notch, at 23°C and -30°C).
(3) Tensile elongation at break: according to JIS K7113 (at 23°C).

It is clear from Table 5 that the mere incorporation of unmodified rubber with polyester results in an decrease in stiffness but has nothing to do with improvement in impact strength (as in Comparative Examples 37 and 40). The blending of AXE-modified EPR with polyester leads to a great improvement in Izod impact strength and tensile elongation at break (as in Comparative Examples 38 and 41). However, this is not practical because the modified EPR is so hard to pelletize that it is poor in productivity. The modified EPR is improved in pelletizability if it is incorporated with 20% of high-density polyethylene (as in Comparative Examples 39 and 42). However, the resulting sample greatly decreases in impact strength at -30°C and hence involves a problem with low-temperature resistance. A probable reason for this is that polyethylene, which has a low viscosity, squeezes itself into interface between polyester and rubber to hamper their miscibility and polyethylene itself has a low low-temperature impact strength.

By contrast, the modified olefin elastomer, as the result of being incorporated with a polyolefin according to the present invention, is greatly improved in pelletizability. In addition, having a high viscosity, the polyethylene is confined in the olefin elastomer. This leads to improved miscibility and improved physical properties, especially low-temperature impact resistance.

This is demonstrated by Examples 36 and 41 in which the compositions merely incorporated with 10 parts by weight of modified EPR are comparable in tensile elongation at break to those in Comparative Examples 38 and 41. The samples in Examples 37 and 42 are superior in low-temperature impact strength to those in Comparative Examples 39 and 42. The modified EPR in Examples 37 and 42 is greatly improved in pelletizability over the one in Comparative Examples 38 and 41. The samples in Examples 38 and 40 differ from those in Examples 37 and 39 in that the modified EPR is partly replaced by unmodified one; however, the former are comparable to the latter in physical properties and hence the former contribute to cost reduction.

Examples 44 to 57 and Comparative Examples 43 to 52

The raw materials and catalyst used are given below.

- Polyester
  Polybutylene terephthalate (PBT):
  "C 7000N" (from Teijin Ltd.) having an intrinsic viscosity [η] of 1.05 (measured at 25°C in o-chlorophenol)
  Polyethylene terephthalate (PET):
  "TR 4550BH" (from Teijin Ltd.) having an intrinsic viscosity [η] of 0.70 (measured at 25°C in o-chlorophenol)
- Polyolefin rubber
  Ethylene-propylene rubber (EPR):
  "PO180" (from Mitsui Petrochemical Industries, Ltd.) having a melt flow rate (MFR) of 6.0 g/10 min (at 230°C, 2.16 kg load)
- Polyethylene
  HDPE: "J6311" (from Tonen Chemical Co., Ltd.) having an MI of 20 g/10 min (at 190°C, 2.16 kg load).
  LLDPE: "G5381" (from Nippon Unicar Co., Ltd.) having an MI of 20 g/10 min (at 190°C, 2.16 kg load).
- Radical polymerization initiator
  POX: "Perhexyne 25B" (from Nippon Oil and Fats Co., Ltd.)
- Modified polyolefin rubber
  (1) Modified ethylene-propylene rubber (modified EPR-1): Prepared from 80 parts by weight of ethylene-propylene rubber (EPR) and 20 parts by weight of HDPE by dry-blending with 0.03 parts by weight of organic peroxide (POX: "Perhexyne 25B") and 3 parts by weight of AXE (from Kanegafuchi Chemical Industry Co., Ltd.), followed by melt-mixing at 200°C in a single-screw extruder (30 mm in diameter and L/D = 25) running at 60 rpm. The mixture was finally pelletized. It has an AXE grafting ratio of 2.4 wt% and a melt flow rate (MFR) of 3.1 g/10 min (at 230°C, 2.16 kg load). It is good in pelletizability.
  (2) Modified ethylene-propylene rubber (modified EPR-2): Prepared from 80 parts by weight of ethylene-propylene rubber and 20 parts by weight of HDPE by dry-blending with 0.03 parts by weight of POX and 3 parts by weight of glycidyl methacrylate (GMA) at 200°C in a single-screw extruder (30 mm in diameter and L/D = 25) running at 60 rpm. The mixture was finally pelletized. It has a GMA grafting ratio of 2.3 wt% and an MFR of 3.3 g/10 min (at 230°C, 2.16 kg load). It is good in pelletizability.

  Incidentally, the GMA grafting ratio was determined in the same manner as the AXE grafting ratio. In other words, it was calculated from the ratio of absorbances at the peak due to the expansion and contraction of the carbonyl bond in GMA and one of the peaks characteristic of isotactic polypropylene.

(3) Modified ethylene-propylene rubber (modified EPR-3): Prepared from 100 parts by weight of ethylene-propylene rubber by dry-blending with 0.03 parts by weight of POX and 3 parts by weight of AXE at 200°C in a single-screw extruder (30 mm in diameter and L/D = 25) running at 60 rpm. The mixture was finally pelletized. It has an AXE grafting ratio of 2.6 wt% and an MFR of 4.6 g/10 min (at 230°C, 2.16 kg load). It is poor in pelletizability.

- Modified polyethylene

(1) Modified polyethylene (modified HDPE):

Prepared from 100 parts by weight of high-density polyethylene (HDPE) by dry-blending with 0.03 parts by weight of POX and 3 parts by weight of maleic anhydride (MAH) at 200°C in a single-screw extruder (30 mm in diameter and L/D = 25) running at 60 rpm. The mixture was finally pelletized. It has an MAH grafting ratio of 0.9 wt% and an MFR of 3.5 g/10 min (at 230°C, 2.16 kg load).

(2) Modified polyethylene (modified LLDPE):

Prepared from 100 parts by weight of linear low-density polyethylene (LLDPE) by dry-blending with 0.03 parts by weight of POX and 3 parts by weight of maleic anhydride (MAH) at 200°C in a single-screw extruder (30 mm in diameter and L/D = 25) running at 60 rpm. The mixture was finally pelletized. It has an MAH grafting ratio of 0.8 wt% and an MFR of 4.2 g/10 min (at 230°C, 2.16 kg load).

- Thermoplastic resin composition

The desired thermoplastic resin composition was prepared from the polyester (PBT or PET), olefin elastomer (EPR), modified polyolefin rubber (modified EPR-1, modified EPR-2, or modified EPR-3), and modified polyethylene (modified HDPE or modified LLDPE) by dry-blending in the ratio shown in Table 6, followed by melt-mixing at 250°C in a twin-screw extruder (45 mm in diameter and L/D = 30) running at 200 rpm. (The melt-mixing temperature was 280°C in the case where the polyester is PET.) The resulting mixture was finally pelletized. The pellets were injection molded into test pieces. Using these test pieces, the thermoplastic resin composition was tested for flexural modulus, Izod impact strength, and tensile elongation at break. The results are shown in Table 6.

Table 6

| Example No. | | 44 | 45 | 46 | 47 | 48 | 49 | 50 |
|---|---|---|---|---|---|---|---|---|
| **Components*** | | | | | | | | |
| Polyester | (PBT) | 90 | 80 | 80 | 80 | 80 | 80 | 70 |
| | (PET) | | | | | | | |
| Polyolefine Rubber | (EPR) | | | | 5 | | | |
| Modified Polyolefine Rubber | (Modified EPR(1)) | 8 | 15 | 10 | 10 | 15 | | 20 |
| | (Modified EPR(2)) | | | | | | 10 | |
| | (Modified EPR(3)) | | | | | | | |
| Modified Polyethlene | (Modified PE(1)) | 2 | 5 | 10 | 5 | | 10 | 10 |
| | (Modified PE(2)) | | | | | 5 | | |
| **Properties** | | | | | | | | |
| Flexural Modulus ($kgf/cm^2$) | (23°C) | 21900 | 21400 | 21500 | 21300 | 20900 | 21000 | 19300 |
| Izod Impact Strength (kgf cm/cm) | (23°C) | 19.3 | 51.7 | 53.1 | 50.7 | 59.4 | 58.1 | 85.2 |
| | (-30°C) | 5.9 | 28.3 | 25.1 | 22.4 | 25.3 | 26.4 | 40.1 |
| Tensile Elongation at Break (%) | (23°C) | 278 | 310 | 285 | 307 | 317 | 288 | 450 |

*: Part by weight

Table 6 (Continued)

| | | Example | | | | | | |
|---|---|---|---|---|---|---|---|---|
| Example No. | | 51 | 52 | 53 | 54 | 55 | 56 | 57 |
| **Components*** | | | | | | | | |
| Polyester | (PBT) | 70 | 70 | 70 | | | | |
| | (PET) | | | | 80 | 80 | 80 | 70 |
| Polyolefine Rubber | (EPR) | 5 | | 10 | | | 5 | 5 |
| Modified Polyolefine Rubber | (Modified EPR(1)) | 20 | | | 10 | 10 | | 20 |
| | (Modified EPR(2)) | | 20 | 15 | | | 10 | |
| | (Modified EPR(3)) | | | | | | | |
| Modified Polyethlene | (Modified PE(1)) | 5 | 10 | 5 | 10 | | 5 | 5 |
| | (Modified PE(2)) | | | | | 10 | | |
| **Properties** | | | | | | | | |
| Flexural Modulus ($kgf/cm^2$) | (23°C) | 19500 | 19200 | 19400 | 21400 | 21000 | 20900 | 18700 |
| Izod Impact Strength (kgf cm/cm) | (23°C) | 77.9 | 80.3 | 79.9 | 47.3 | 47.3 | 45.1 | 65.7 |
| | (-30°C) | 40.1 | 42.5 | 39.8 | 20.4 | 21.1 | 20.7 | 39.4 |
| Tensile Elongation at Break (%) | (23°C) | 370 | 440 | 299 | 145 | 187 | 192 | 244 |

*: Part by weight

Table 6 (Continued)

| Example No. | | Comparative Example 43 | 44 | 45 | 46 | 47 | 48 |
|---|---|---|---|---|---|---|---|
| **Components*** | | | | | | | |
| Polyester | (PBT) | 100 | | 80 | 80 | 80 | 80 |
| | (PET) | | 100 | | | | |
| Polyolefine Rubber | (EPR) | | | 20 | | | |
| Modified Polyolefine Rubber | (Modified EPR(1)) | | | | | 20 | |
| | (Modified EPR(2)) | | | | | | 20 |
| | (Modified EPR(3)) | | | | 20 | | |
| Modified Polyethlene | (Modified PE(1)) | | | | | | |
| | (Modified PE(2)) | | | | | | |
| **Properties** | | | | | | | |
| Flexural Modulus ($kgf/cm^2$) | (23°C) | 23400 | 24200 | 20300 | 20500 | 21100 | 20500 |
| Izod Impact Strength (kgf cm/cm) | (23°C) | 3.6 | 2.8 | 5.1 | 58.6 | 53.4 | 52.7 |
| | (-30°C) | 3.3 | 1.9 | 3.4 | 25.3 | 15.6 | 15.1 |
| Tensile Elongation at Break (%) | (23°C) | 150 | 68 | 35 | 290 | 320 | 295 |

*: Part by weight

Table 6 (Continued)

| Example No. | | Comparative Example 49 | 50 | 51 | 52 |
|---|---|---|---|---|---|
| **Components*** | | | | | |
| Polyester | (PBT) | | | | |
| | (PET) | 80 | 80 | 80 | 80 |
| Polyolefine Rubber | (EPR) | 20 | | | |
| Modified Polyolefine Rubber | (Modified EPR(1)) | | | 20 | |
| | (Modified EPR(2)) | | | | 20 |
| | (Modified EPR(3)) | | 20 | | |
| Modified Polyethlene | (Modified PE(1)) | | | | |
| | (Modified PE(2)) | | | | |
| **Properties** | | | | | |
| Flexural Modulus ($kgf/cm^2$) (23°C) | | 20800 | 21100 | 22100 | 21400 |
| Izod Impact Strength (kgf cm/cm) | (23°C) | 3.9 | 45.2 | 41.3 | 43.1 |
| | (-30°C) | 3.0 | 12.8 | 6.7 | 8.4 |
| Tensile Elongation at Break (%) | (23°C) | 21 | 162 | 113 | 132 |

*: Part by weight

The same test methods as in Table 5 were used.

It is clear from Table 6 that the mere incorporation of unmodified rubber with polyester results in an decrease in stiffness but has nothing to do with improvement in impact strength (as in Comparative Examples 45 and 49). The blending of AXE-modified EPR with polyester leads to a great improvement in Izod impact strength and tensile elongation at break (as in Comparative Examples 46 and 50). However, this is not practical because the modified EPR is so hard to pelletize that it is poor in productivity. The modified EPR is improved in pelletizability if it is incorporated with 20% of polyethylene (as in Comparative Examples 47, 48, 51, and 52). However, the resulting sample greatly decreases in impact strength at -30°C and hence involves a problem with low-temperature resistance. A probable reason for this is that polyethylene squeezes itself into the interface between polyester and the modified rubber to hamper their miscibility.

By contrast, the composition of the present invention, which is incorporated with modified polyolefin as

well as polyester and polyethylene-containing easily pelletizable modified olefin elastomer, is good in all of flexural modulus, Izod impact strength, and tensile elongation at break. It is especially good in impact strength at -30°C.

The sample in Example 47 differs from that in Example 45 in that the modified EPR is partly replaced by unmodified one; however, the former is comparable to the latter in physical properties and hence it contributes to cost reduction.

Examples 58 to 70 and Comparative Examples 53 to 59

The raw materials and catalyst used are given below.

- Polyester
  (1) Polybutylene terephthalate-1 (PBT-1):
  "C 7000N" (from Teijin Ltd.) having an intrinsic viscosity [η] of 1.07 (measured at 25°C in o-chlorophenol) and an MFR of 25.0 g/10 min (at 275°C, 2.16 kg load).
  (2) Polybutylene terephthalate-2 (PBT-2):
  "C 7000N" (from Teijin Ltd.) having an intrinsic viscosity [η] of 0.87 (measured at 25°C in o-chlorophenol) and an MFR of 70.4 g/10 min (at 275°C, 2.16 kg load).
- Polyolefin rubber
  (1) Ethylene-propylene rubber-1 (EPR-1):
  "EP02P" (from Japan Synthetic Rubber Co., Ltd.) containing 26 wt% ethylene and having an MFR of 3.2 g/10 min (at 230°C, 2.16 kg load).
  (2) Ethylene-propylene rubber-2 (EPR-2):
  "PO180" (from Mitsui Petrochemical Industries, Ltd.) containing 22 wt% ethylene and having an MFR of 6.0 g/10 min (at 230°C, 2.16 kg load)
  (3) Ethylene-propylene rubber-3 (EPR-3):
  "EP912P" (from Japan Synthetic Rubber Co., Ltd.) containing 22 wt% ethylene and having an MFR of 8.4 g/10 min (at 230°C, 2.16 kg load).
- Modifier
  AXE (from Kanegafuchi Chemical Industry Co., Ltd.)
- Radical polymerization catalyst
  POX: "Perhexyne 25B" (from Nippon Oil and Fats Co., Ltd.)
- Modified polyolefin rubber
  (1) Modified ethylene-propylene rubber (MEPR-1):
  Prepared from 100 parts by weight of ethylene-propylene rubber (EPR-1) by dry-blending with 0.03 parts by weight of organic peroxide (POX) and 3 parts by weight of AXE, followed by melt-mixing at 180°C in a twin-screw extruder (54 mm in diameter and L/D = 42) running at 100 rpm. The mixture was finally pelletized. It has an AXE grafting ratio of 2.8 wt% and an MFR of 59 g/10 min (at 275°C, 21.6 kg load).
  (2) Modified ethylene-propylene rubber (MEPR-2):
  Prepared from 100 parts by weight of the ethylene-propylene rubber (EPR-1) by dry-blending with 0.03 parts by weight of POX and 5 parts by weight of AXE, followed by melt-mixing at 180°C in a twin-screw extruder (54 mm in diameter and L/D = 42) running at 100 rpm. The mixture was finally pelletized. It has an AXE grafting ratio of 4.8 wt% and an MFR of 63 g/10 min (at 275°C, 21.6 kg load).
  (3) Modified ethylene-propylene rubber (MEPR-3):
  Prepared from 100 parts by weight of the ethylene-propylene rubber (EPR-2) by dry-blending with 0.03 parts by weight of POX and 5 parts by weight of AXE, followed by melt-mixing at 180°C in a twin-screw extruder (54 mm in diameter and L/D = 42) running at 100 rpm. The mixture was finally pelletized. It has an AXE grafting ratio of 4.9 wt% and an MFR of 121 g/10 min (at 275°C, 21.6 kg load).
  (4) Modified ethylene-propylene rubber (MEPR-4):
  Prepared from 100 parts by weight of the ethylene-propylene rubber (EPR-1) by dry-blending with 0.1 parts by weight of POX and 5 parts by weight of AXE, followed by melt-mixing at 180°C in a twin-screw extruder (54 mm in diameter and L/D = 42) running at 100 rpm. The mixture was finally pelletized. It has an AXE grafting ratio of 4.8 wt% and an MFR of 9.0 g/10 min (at 275°C, 21.6 kg load).
  (5) Modified ethylene-propylene rubber (MEPR-5):
  Prepared from 100 parts by weight of the ethylene-propylene rubber (EPR-3) by dry-blending with 0.05 parts by weight of POX and 5 parts by weight of AXE, followed by melt-mixing at 180°C in a twin-screw extruder (54 mm in diameter and L/D = 42) running at 100 rpm. The mixture was finally pelletized. It has an AXE grafting ratio of 4.6 wt% and an MFR of 300 g/10 min (at 275°C, 21.6 kg load).

- Thermoplastic resin composition
  The desired thermoplastic resin composition was prepared from the polyester (PBT-1 or PBT-2) and modified polyolefin rubber (MEPR-1, MEPR-2, MEPR-3, MEPR-4, or MEPR-5) by dry-blending in the ratio shown in Table 7, followed by melt-mixing at 250°C in a twin-screw extruder (30 mm in diameter and L/D = 42) running at 300 rpm. The resulting mixture was finally pelletized. The pellets were injection molded into test pieces. Using these test pieces, the thermoplastic resin composition was tested for MFR, Izod impact strength, flexural modulus, and surface mean diameter of polyolefin rubber particles dispersed in polyester. The results are shown in Table 7.

Table 7

| Example No. | Example 58 | 59 | 60 | 61 | 62 | 63 | 64 |
|---|---|---|---|---|---|---|---|
| **Components** | | | | | | | |
| Polyester | | | | | | | |
| Type | PBT-1 | ← | ← | ← | ← | ← | ← |
| Volume (% by weight) | 95 | 90 | 80 | 70 | 60 | 90 | 80 |
| MFR*1 | 25 | ← | ← | ← | ← | ← | ← |
| Modified Polyolefine Rubber | | | | | | | |
| Type | MEPR-1 | ← | ← | ← | ← | MEPR-2 | ← |
| Volume (% by weight) | 5 | 10 | 20 | 30 | 40 | 10 | 20 |
| MFR*2 | 59 | ← | ← | ← | ← | 63 | ← |
| Production Workability*3 | O | O | O | O | O | O | O |
| **Properties** | | | | | | | |
| MFR*1 | 25.9 | 26.1 | 18.0 | 16.4 | 15.4 | 21.7 | 16.5 |
| Izod Impact Strength (kgf cm/cm) (23°C) | 7.1 | 10.6 | 18.4 | 30.6 | 49.6 | 14.3 | 23.4 |
| Flexural Modulus ($kgf/cm^2$) (23°C) | 21800 | 19000 | 16100 | 14500 | 12400 | 19000 | 16200 |
| Diameter of dispersed particles (μm) | 0.40 | 0.42 | 0.45 | 0.49 | 0.59 | 0.37 | 0.39 |

*1: MFR (g/10 minutes; 275°C, 2.16kg load)
*2: MFR (g/10 minutes; 275°C, 21.6kg load)
*3: O……Good, Δ……Modified Rubber is blocking.

Table 7 (Continued)

| | Example | | | | | |
|---|---|---|---|---|---|---|
| Example No. | 65 | 66 | 67 | 68 | 69 | 70 |
| **Components** | | | | | | |
| Polyester | | | | | | |
| Type | PBT-1 | ← | ← | ← | PBT-2 | ← |
| Volume (% by weight) | 70 | 90 | 80 | 70 | 90 | ← |
| MFR*1 | 25 | ← | ← | ← | 70.4 | ← |
| Modified Polyolefine Rubber | | | | | | |
| Type | MEPR-2 | MEPR-3 | ← | ← | ← | MEPR-5 |
| Volume (% by weight) | 30 | 10 | 20 | 30 | 10 | ← |
| MFR*2 | 63 | 121 | ← | ← | ← | 300 |
| **Production Workability*3** | O | O | O | O | O | O |
| **Properties** | | | | | | |
| MFR*1 | 14.8 | 18.3 | 17.1 | 12.9 | 31.1 | 41.9 |
| Izod Impact Strength (kgf cm/cm) (23°C) | 36.4 | 17.9 | 29.3 | 44.3 | 8.6 | 10.4 |
| Flexural Modulus ($kgf/cm^2$) (23°C) | 14600 | 18900 | 16200 | 14500 | 18800 | 18700 |
| Diameter of dispersed particles (μm) | 0.42 | 0.33 | 0.34 | 0.39 | 0.34 | 0.29 |

*1: MFR (g/10 minutes; 275°C, 2.16kg load)
*2: MFR (g/10 minutes; 275°C, 21.6kg load)
*3: O······ Good, Δ······Modified Rubber is blocking.

Table 7 (Continued)

| Example No. | Comparative Example 53 | 54 | 55 | 56 | 57 | 58 | 59 |
|---|---|---|---|---|---|---|---|
| **Components** | | | | | | | |
| Polyester | | | | | | | |
| Type | PBT-1 | ← | ← | ← | ← | ← | ← |
| Volume (% by weight) | 100 | 90 | 80 | 70 | 90 | 80 | 70 |
| MFR*1 | 25 | ← | ← | ← | ← | ← | ← |
| Modified Polyolefine Rubber | | | | | | | |
| Type | - | MEPR-4 | ← | ← | MEPR-5 | ← | ← |
| Volume (% by weight) | - | 10 | 20 | 30 | 10 | 20 | 30 |
| MFR*2 | - | 9.0 | ← | ← | 300 | ← | ← |
| Production Workability*3 | - | O | O | O | Δ | Δ | Δ |
| **Properties** | | | | | | | |
| MFR*1 | 25.0 | 32.0 | 16.5 | 12.1 | 37.6 | 19.9 | 16.3 |
| Izod Impact Strength (kgf cm/cm) (23°C) | 2.3 | 6.2 | 12.3 | 21.6 | 9.6 | 14.9 | 27.3 |
| Flexural Modulus ($kgf/cm^2$) (23°C) | 23800 | 18800 | 15800 | 14100 | 18700 | 15700 | 14000 |
| Diameter of dispersed particles (µm) | - | 1.20 | 1.51 | 1.96 | 0.74 | 0.80 | 0.91 |

*1: MFR (g/10 minutes; 275°C, 2.16kg load)
*2: MFR (g/10 minutes; 275°C, 21.6kg load)
*3: O····· Good, Δ·····Modified Rubber is blocking.

The following test methods were used to measure the physical properties shown in Table 7.

(1) MFR: according to JIS K6758 (at 275°C, 2.16 kg load)
(2) Izod impact strength: according to JIS K7110 (with a V-notch, at 23°C)
(3) Flexural modulus: according to JIS K7203 (at 23°C)
(4) Diameter of dispersed particles:

The sample is crushed in liquefied nitrogen and the crushed sample is extracted with boiling xylene to leach out the modified polyolefin rubber. The rupture cross-section is photographed by a scanning electron microscope and the surface mean diameter is calculated by the aid of an image analyzer.

It is clear from Table 7 that the blending of polyester with a modified polyolefin having a low MFR (as in Comparative Examples 54 to 56) results in the mixing operation being satisfactory but the particles being poor in miscibility due to their large diameter. Hence the resulting sample has unbalanced impact strength and flexural modulus. The blending of polyester with a modified polyolefin having a high MFR (as in Comparative Examples 57 to 59) slightly improves the dispersibility and miscibility but causes the blocking of the modified polyolefin rubber and hence greatly aggravates the working properties. By contrast, it is noted that the thermoplastic resin compositions of the present invention (as in Examples 58 to 70) have balanced impact strength and flexural modulus due to good working properties and good miscibility for dispersion.

Examples 71 to 73 and ComDarative Examples 60 to 68

The raw materials and catalyst used are given below.

- Polyester
  Polybutylene terephthalate (PBT):
  "C 7000N" (from Teijin Ltd.) having an intrinsic viscosity [η] of 1.05 (measured at 25°C in o-chlorophenol).
- Unmodified polyolefin
  (1) Ethylene-propylene rubber (EPR):
  "EP02P" (from Japan Synthetic Rubber Co., Ltd.) having a melt flow rate (MFR) of 1.5 g/10 min (at 230°C, 2.16 kg load).
  (2) Polypropylene (PP):
  "Y201" (from Tonen Chemical Co., Ltd.) having a melt flow rate (MFR) of 1.5 g/10 min (at 230°C, 2.16 kg load)
  (3) Polyethylene (PE):
  "J6170" (from Tonen Chemical Co., Ltd.) having a melt flow rate (MFR) of 11 g/10 min (at 230°C, 2.16 kg load).
- Radical polymerization catalyst
  POX: "Perhexyne 25B" (from Nippon Oil and Fats Co., Ltd.)
- Modified polyolefin
  (1) Modified ethylene-propylene rubber (modified EPR):
  (a) Modified EPR-1:
  Prepared from 100 parts by weight of ethylene-propylene rubber ("EP02P" from Japan Synthetic Rubber Co., Ltd.) by melt-mixing with 0.02 parts by weight of organic peroxide (POX, "Perhexyne 25B" from Nippon Oil and Fats Co., Ltd.) and 3 parts by weight of AXE (from Kanegafuchi Chemical Industry Co., Ltd.) at 180°C in a single-screw extruder (30 mm in diameter and L/D = 23) running at 50 rpm. It has an AXE grafting ratio of 2.0 wt% (with 0.9 wt% becoming polymerized and remaining ungrafted) and a melt flow rate (MFR) of 1.4 g/10 min (at 230°C, 2.16 kg load).
  (b) Modified EPR-2:
  Prepared from 100 parts by weight of ethylene-propylene rubber ("EP02P" from Japan Synthetic Rubber Co., Ltd.) by melt-mixing with 0.1 parts by weight of POX and 2 parts by weight of AXE at 180°C in a single-screw extruder (30 mm in diameter and L/D = 23) running at 50 rpm. It has an AXE grafting ratio 1.8 wt% (with less than 0.01 wt% becoming polymerized and remaining ungrafted) and a melt flow rate (MFR) of 1.6 g/10 min (at 230°C, 2.16 kg load).
  (c) Modified EPR-3:
  Prepared from 100 parts by weight of ethylene-propylene rubber ("EP02P" from Japan Synthetic Rubber Co., Ltd.) by melt-mixing with 0.1 parts by weight of POX and 1 part by weight of maleic anhydride (MAH) at 180°C in a single-screw extruder (30 mm in diameter and L/D = 23) running at 50 rpm. It has an MAH grafting ratio of 0.8 wt% (with less than 0.1 wt% remaining ungrafted) and a melt flow rate (MFR) of 1.2 g/10 min (at 230°C, 2.16 kg load).
  (2) Modified polypropylene (modified PP):
  (a) Modified PP-1:
  Prepared from 100 parts by weight of polypropylene ("Y201" from Tonen Chemical Co., Ltd.) by melt-mixing with 0.05 parts by weight of POX and 3 parts by weight of AXE at 200°C in a single-screw extruder (30 mm in diameter and L/D = 23) running at 80 rpm. It has an AXE grafting ratio of 2.1 wt% (with 0.8 wt% becoming polymerized and remaining ungrafted) and a melt flow rate (MFR) of 13 g/10 min (at 230°C, 2.16 kg load).

(b) Modified PP-2:

Prepared from 100 parts by weight of polypropylene ("Y201" from Tonen Chemical Co., Ltd.) by melt-mixing with 0.1 parts by weight of POX and 2 parts by weight of AXE at 200°C in a single-screw extruder (30 mm in diameter and L/D = 23) running at 80 rpm. It has an AXE grafting ratio of 1.8 wt% (with less than 0.01 wt% becoming polymerized and remaining ungrafted) and a melt flow rate (MFR) of 19 g/10 min (at 230°C, 2.16 kg load).

(c) Modified PP-3:

Prepared from 100 parts by weight of polypropylene ("Y201" from Tonen Chemical Co., Ltd.) by melt-mixing with 0.3 parts by weight of POX and 1 part by weight of MAH at 200°C in a single-screw extruder (30 mm in diameter and L/D = 23) running at 80 rpm. It has an MAH grafting ratio of 0.4 wt% (with less than 0.2 wt% remaining ungrafted) and a melt flow rate (MFR) of 34 g/10 min (at 230°C, 2.16 kg load).

(3) Modified polyethylene (modified PE):

(a) Modified PE-1:

Prepared from 100 parts by weight of polyethylene ("J6170" from Tonen Chemical Co., Ltd.) by melt-mixing with 0.02 parts by weight of POX and 3 parts by weight of AXE at 200°C in a single-screw extruder (30 mm in diameter and L/D = 23) running at 70 rpm. It has an AXE grafting ratio of 1.9 wt% (with 1.0 wt% becoming polymerized and remaining ungrafted) and a melt flow rate (MFR) of 6.5 g/10 min (at 230°C, 2.16 kg load).

(b) Modified PE-2:

Prepared from 100 parts by weight of polyethylene ("J6170" from Tonen Chemical Co., Ltd.) by melt-mixing with 0.1 parts by weight of POX and 2 parts by weight of AXE at 200°C in a single-screw extruder (30 mm in diameter and L/D = 23) running at 70 rpm. It has an AXE grafting ratio of 1.8 wt% (with less than 0.01 wt% becoming polymerized and remaining ungrafted) and a melt flow rate (MFR) of 6.0 g/10 min (at 230°C, 2.16 kg load).

(c) Modified PE-3:

Prepared from 100 parts by weight of polyethylene ("J6170" from Tonen Chemical Co., Ltd.) by melt-mixing with 0.1 parts by weight of POX and 1 part by weight of MAH at 200°C in a single-screw extruder (30 mm in diameter and L/D = 23) running at 70 rpm. It has an MAH grafting ratio of 0.7 wt% (with less than 0.1 wt% remaining ungrafted) and a melt flow rate (MFR) of 4.3 g/10 min (at 230°C, 2.16 kg load). Tables 8 to 10 show the raw materials of the aforesaid modified polyolefins and the ratio of AXE which was grafted and the ratio of AXE which became polymerized and remained ungrafted.

Table 8: Modified Polyolefine (1)

| | Modified EPR (1) | Modified PP (1) | Modified PE (1) |
|---|---|---|---|
| Modified Polyolefine(wt%) | 100 | 100 | 100 |
| (a) AXE (wt%) | 3 | 3 | 3 |
| (b) POX (wt%) | 0.02 | 0.05 | 0.02 |
| (a) / (b) | 150 | 60 | 150 |
| (c) AXE Grafting Ratio (wt%) | 2.0 | 2.1 | 1.9 |
| (d) AXE Ungrafted (wt%) | 0.9 | 0.8 | 1.0 |
| (c) / (d) | 2.2 | 2.6 | 1.9 |

Table 9: Modified Polyolefine (2)

| | Modified EPR (2) | Modified PP (2) | Modified PE (2) |
|---|---|---|---|
| Modified Polyolefine(wt%) | 100 | 100 | 100 |
| (a) AXE (wt%) | 2 | 2 | 2 |
| (b) POX (wt%) | 0.1 | 0.1 | 0.1 |
| (a) / (b) | 20 | 20 | 20 |
| (c) AXE Grafting Ratio (wt%) | 1.8 | 1.8 | 1.8 |
| (d) AXE Ungrafted (wt%) | <0.01 | <0.01 | <0.01 |
| (c) / (d) | >180 | >180 | >180 |

Table 10: Modified Polyolefine (3)

| | Modified EPR (3) | Modified PP (3) | Modified PE (3) |
|---|---|---|---|
| Modified Polyolefine(wt%) | 100 | 100 | 100 |
| (a) MAH (wt%) | 1 | 1 | 1 |
| (b) POX (wt%) | 0.1 | 0.3 | 0.1 |
| (c) MAH Grafting Ratio (wt%) | 0.8 | 0.4 | 0.7 |
| (d) MAH Ungrafted (wt%) | <0.1 | <0.2 | <0.1 |
| (c) / (d) | >8 | >2 | >7 |

• Thermoplastic resin composition

The desired thermoplastic resin composition was prepared from the polyester (PBT) and modified polyolefin (modified EPR-1, modified EPR-2, modified EPR-3, modified PP-1, modified PP-2, modified PP-3, modified PE-1, modified PE-2, or modified PE-3) or unmodified polyolefin (unmodified EPR, unmodified PP, or unmodified PE) in the ratio shown in Table 11 by melt-mixing at 250°C in a twin-screw extruder (45 mm in diameter) running at 200 rpm. The resulting mixture was finally pelletized. The pellets were injection molded into test

pieces. Using these test pieces, the thermoplastic resin composition was tested for flexural modulus, tensile yield strength, tensile elongation at break, Izod impact strength, and melt flow rate (MFR, at 250°C and 2.16 kg load). The results are shown in Table 11.

Table 11

| Example No. | 71 | 72 | 73 |
|---|---|---|---|
| **Components*** | | | |
| Polyester (PBT) | 80 | 80 | 80 |
| Modified Polyolefine | | | |
| Modified EPR (1) | 20 | | |
| Modified PP (1) | | 20 | |
| Modified PE (1) | | | 20 |
| **Properties** | | | |
| Flexural Modulus ($kgf/cm^2$) | 15400 | 21500 | 17500 |
| Tensile Yield Strength ($kgf/cm^2$) | 588 | 744 | 680 |
| Tensile Elongation at Break (%) | 121 | 117 | 145 |
| Izod Impact Strength (kgf·cm/cm) | | | |
| 23°C | 64 | 11 | 17 |
| -30°C | 17 | 8.3 | 10 |
| Melt Flow Rate (g/10min., 250°C, 2.16kg) | 12 | 14 | 10 |

*: % by weight

Table 11 (Continued)

| Comparative Example No. | 60 | 61 | 62 | 63 | 64 | 65 | 66 | 67 | 68 |
|---|---|---|---|---|---|---|---|---|---|
| Components* | | | | | | | | | |
| Polyester (PBT) | 80 | 80 | 80 | 80 | 80 | 80 | 80 | 80 | 80 |
| Polyolefine | | | | | | | | | |
| Modified EPR (2) | 20 | | | | | | | | |
| Modified EPR (3) | | 20 | | | | | | | |
| Unmodified EPR | | | 20 | | | | | | |
| Modified PP (2) | | | | 20 | | | | | |
| Modified PP (3) | | | | | 20 | | | | |
| Unmodified PP | | | | | | 20 | | | |
| Modified PE (2) | | | | | | | 20 | | |
| Modified PE (3) | | | | | | | | 20 | |
| Unmodified PE | | | | | | | | | 20 |
| Properties | | | | | | | | | |
| Flexural Modulus ($kgf/cm^2$) | 15100 | 15000 | 142000 | 20200 | 20800 | 18900 | 17000 | 16800 | 15400 |
| Tensile Yield Strength ($kgf/cm^2$) | 407 | 351 | 294 | 511 | 427 | 326 | 485 | 451 | 303 |
| Tensile Elongation at Break (%) | 63 | 38 | 24 | 60 | 33 | 21 | 74 | 41 | 29 |
| Izod Impact Strength (kgf·cm/cm) 23°C | 55 | 20 | 12 | 10 | 8.0 | 5.5 | 15 | 8.3 | 5.7 |
| -30°C | 15 | 6.4 | 5.0 | 7.7 | 7.5 | 4.5 | 9 | 6.6 | 4.3 |
| Melt Flow Rate (g/10min., 250°C, 2.16kg) | 18 | 25 | 29 | 25 | 31 | 42 | 19 | 28 | 33 |

*: % by weight

The following test methods were used to measure the physical properties shown in Table 11.

(1) Flexural modulus: according to ASTM D790 (at 23°C)
(2) Tensile yield strength: according to ASTM D638 (at 23°C)
(3) Tensile elongation at break: according to ASTM D638 (at 23°C)
(4) Izod impact strength: according to ASTM D256 (at 23°C and -30°C)
(5) Melt flow rate: at 250°C, 2.16 kg load

It is clear from Table 11 that the thermoplastic resin composition prepared by the process of the present invention is superior in flexural modulus, tensile yield strength, tensile elongation at break, and Izod impact strength to the samples in Comparative Examples 62, 65, and 68 (which are composed of polyester and unmodified polyolefin), the samples in Comparative Examples 61, 64, and 67 (which contain MAH as the modifier), and the samples in Comparative Examples 60, 63, and 66 (which contain AXE as the modifier such that the ratio of grafted AXE and ungrafted AXE is outside the range specified in the present invention). It turns out that improvement in tensile yield strength and tensile elongation at break is remarkable.

Examples 74 to 76 and Comparative Examples 69 to 77

The same raw materials as in Examples 71 to 73 were used, except that the polyester was replaced by a polyamide (nylon 6), "A1030BRL" (from Unitika Ltd.) having a relative viscosity [$\eta_r$] of 2.6 (measured according to JIS K6810, using 98% sulfuric acid as a solvent).

• Thermoplastic resin composition

The desired thermoplastic resin composition was prepared from the polyamide (nylon 6) and modified polyolefin (modified EPR-1, modified EPR-2, modified EPR-3, modified PP-1, modified PP-2, modified PP-3, modified PE-1, modified PE-2, or modified PE-3) or unmodified polyolefin (unmodified EPR, unmodified PP, or unmodified PE), as used in Examples 71 to 73, in the ratio shown in Table 12 by melt-mixing at 250°C in a twin-screw extruder (45 mm in diameter) running at 200 rpm. The resulting mixture was finally pelletized.

The resulting samples were tested for flexural modulus, tensile yield strength, tensile elongation at break, Izod impact strength, and melt flow rate (MFR, at 250°C and 2.16 kg load). The results are shown in Table 12.

Table 12

| Example No. | 74 | 75 | 76 |
| --- | --- | --- | --- |
| <u>Components</u>* | | | |
| Polyamide (Nylon6) | 80 | 80 | 80 |
| Modified Polyolefine | | | |
| Modified EPR (1) | 20 | | |
| Modified PP (1) | | 20 | |
| Modified PE (1) | | | 20 |
| <u>Properties</u> | | | |
| Flexural Modulus ($kgf/cm^2$) | 16200 | 23000 | 19300 |
| Tensile Yield Strength ($kgf/cm^2$) | 558 | 880 | 700 |
| Tensile Elongation at Break (%) | 95 | 92 | 102 |
| Izod Impact Strength (kgf·cm/cm) | | | |
| 23°C | 64 | 12 | 19 |
| -30°C | 19 | 9.4 | 10 |
| Melt Flow Rate (g/10min., 250°C, 2.16kg) | 18 | 21 | 16 |

*: % by weight

Table 12 (Continued)

| Comparative Example No. | 69 | 70 | 71 | 72 | 73 | 74 | 75 | 76 | 77 |
|---|---|---|---|---|---|---|---|---|---|
| Components* | | | | | | | | | |
| Polyamide (Nylon 6) | 80 | 80 | 80 | 80 | 80 | 80 | 80 | 80 | 80 |
| Polyolefine | | | | | | | | | |
| Modified EPR (2) | 20 | | | | | | | | |
| Modified EPR (3) | | 20 | | | | | | | |
| Unmodified EPR | | | 20 | | | | | | |
| Modified PP (2) | | | | 20 | | | | | |
| Modified PP (3) | | | | | 20 | | | | |
| Unmodified PP | | | | | | 20 | | | |
| Modified PE (2) | | | | | | | 20 | | |
| Modified PE (3) | | | | | | | | 20 | |
| Unmodified PE | | | | | | | | | 20 |
| Properties | | | | | | | | | |
| Flexural Modulus ($kgf/cm^2$) | 15500 | 15300 | 15000 | 22400 | 22500 | 21200 | 18600 | 18300 | 16500 |
| Tensile Yield Strength ($kgf/cm^2$) | 493 | 485 | 287 | 640 | 632 | 377 | 540 | 544 | 291 |
| Tensile Elongation at Break (%) | 60 | 54 | 11 | 65 | 52 | 24 | 74 | 68 | 19 |
| Izod Impact Strength (kgf·cm/cm) 23°C | 58 | 55 | 19 | 11 | 11 | 4.1 | 15 | 14 | 6.5 |
| -30°C | 17 | 15 | 8.5 | 7.4 | 7.3 | 3.5 | 8.7 | 8.0 | 3.7 |
| Melt Flow Rate (g/10min., 250°C, 2.16kg) | 34 | 40 | 51 | 42 | 48 | 55 | 31 | 38 | 44 |

*: % by weight

The same test methods as in Table 11 were used.

It is clear from Table 12 that the thermoplastic resin composition prepared by the process of the present invention is superior in flexural modulus, tensile yield strength, tensile elongation at break, and Izod impact strength to the samples in Comparative Examples 71, 74, and 77 (which are composed of polyamide and unmodified polyolefin), samples in Comparative Examples 70, 73 and 76 (which contain MAH as the modifier), and samples in Comparative Examples 69, 72, and 75 (which contain AXE as the modifier such that the ratio of grafted AXE and ungrafted AXE is outside the range specified in the present invention). It turns out that improvement in tensile yield strength and tensile elongation at break is remarkable.

As mentioned in great detail above, the present invention provides a thermoplastic resin composition which is composed of a polyester (or polyamide), olefin elastomer, and modified olefin elastomer and is superior in impact resistance, modulus, surface hardness, heat resistance (softening point), and appearance (with a minimum of discoloration).

The present invention provides a thermoplastic resin composition which is composed of an olefin elastomer modified with a specific unsaturated glycidyl compound having an acrylamide group and an epoxy group, an olefin elastomer modified with an unsaturated carboxylic acid or a derivative thereof, and a polyester or polyamide. These components are melt-mixed such that the polyester (or polyamide) and the modified olefin elastomer are made miscible with each other. The resin composition has the characteristic properties of the polyester (or polyamide) and olefin elastomer, and hence it is superior in heat resistance and mechanical properties and has a low specific gravity.

The present invention provides a thermoplastic resin composition which is composed of a polyester (or polyamide) and a modified olefin elastomer. The resin composition is superior in stiffness and impact resistance. The modified elastomer as a component is readily pelletized, and this contributes to improved productivity.

The present invention provides a thermoplastic resin composition which is composed of a polyester (or polyamide) and a modified polyolefin rubber (with its viscosity adjusted). The resin composition can be produced with good working properties and has balanced stiffness and impact resistance.

The present invention provides a thermoplastic resin composition which has improved impact resistance and hydrolysis resistance because of the uniform dispersion in a polyester (or polyamide) of an olefin elastomer modified with an unsaturated glycidyl compound. The present invention also provides a thermoplastic resin composition which has improved impact resistance and tensile strength because the modifier which is not grafted to the olefin elastomer becomes a polymer and polymerizes the polyester or polyamide.

The thermoplastic resin composition of the present invention will find use as engineering plastics for automotive interior parts, home electric appliance parts, industrial machine parts, sporting goods, furniture, stationery, and packaging materials.

## Claims

1. A thermoplastic resin composition which comprises (a) a polyester or polyamide, (b1) an olefin elastomer modified with an unsaturated glycidyl compound represented by the formula (I) below, and (c) an olefin elastomer

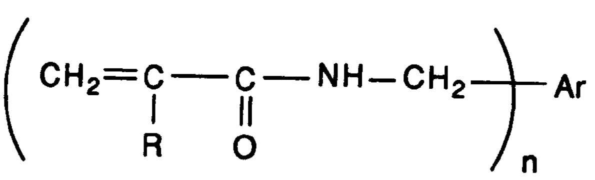

(I)

(where R denotes a hydrogen atom or $C_{1-6}$ alkyl group; Ar denotes a $C_{6-20}$ aromatic hydrocarbon group having at least one glycidyloxy group; and n is an integer of 1 to 4.)

2. A thermoplastic resin composition as defined in Claim 1, wherein the components (a), (b1), and (c) are present in the ratio defined by (a)/{(b1)+(c)} = 70/30 - 2/98 (by weight), and the components (b1) and (c) are present in the ratio defined by (b1)/(c) = 95/5 - 5/95 (by weight).

3. A thermoplastic resin composition which comprises (a) a polyester or polyamide, (b1) an olefin elastomer modified with an unsaturated glycidyl compound represented by the formula (I) below, and (d1) an olefin

elastomer modified with an unsaturated carboxylic acid or a derivative thereof

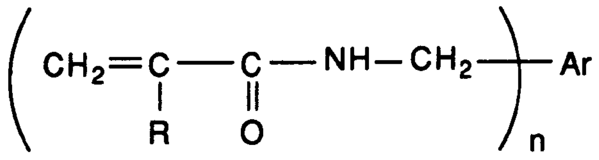

(I)

(where R denotes a hydrogen atom or $C_{1-6}$ alkyl group; Ar denotes a $C_{6-20}$ aromatic hydrocarbon group having at least one glycidyloxy group; and n is an integer of 1 to 4.)

4. A thermoplastic resin composition as defined in Claim 3, wherein the components (a), (b1), and (d1) are present in the ratio defined by (a)/{(b1)+(d1)} = 50/50 - 2/98 (by weight), and the components (b1) and (d1) are present in the ratio defined by (b1)/(d1) = 98/2 - 2/98 (by weight).

5. A thermoplastic resin composition which comprises (a) a polyester or polyamide, (b1+b2) an olefin elastomer which is a mixture of 5-80 wt% of polyolefin and 95-20 wt% of olefin elastomer modified with an unsaturated glycidyl compound represented by the formula (I) below, and (c) an olefin elastomer

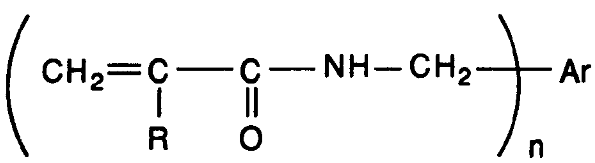

(I)

(where R denotes a hydrogen atom or $C_{1-6}$ alkyl group; Ar denotes a $C_{6-20}$ aromatic hydrocarbon group having at least one glycidyloxy group; and n is an integer of 1 to 4.)

6. A thermoplastic resin composition as defined in Claim 5, wherein the components (a), (b1+b2), and (c) are present in the ratio defined by (a)/{(b1+b2)+(c)} = 98/2 - 30/70 (by weight), and the components (b1+b2) and (c) are present such that the former accounts for more than 30 wt%.

7. A thermoplastic resin composition which comprises (a) a polyester or polyamide, (b1+b2) an olefin elastomer which is a mixture of 5-80 wt% of polyolefin and 95-20 wt% of olefin elastomer modified with an unsaturated glycidyl compound represented by the formula (I) below, (c) an olefin elastomer, and (d2) a polyethylene modified with an unsaturated carboxylic acid or a derivative thereof

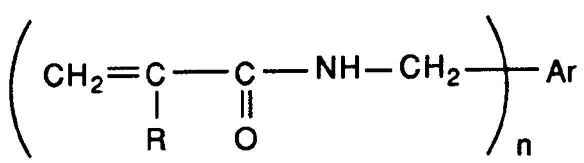

(I)

(where R denotes a hydrogen atom or $C_{1-6}$ alkyl group; Ar denotes a $C_{6-20}$ aromatic hydrocarbon group having at least one glycidyloxy group; and n is an integer of 1 to 4.)

8. A thermoplastic resin composition as defined in Claim 7, wherein the components (a), (b1+b2), (c), and (d2) are present in the ratio defined by (a)/{(b1+b2)+ (c)+(d2)} = 98/2 - 30/70 (by weight), the components (b1+b2) and (c) are present such that the former accounts for more than 30 wt%, and the components (b1+b2) and (d2) are present in the ratio defined by (b1+b2)/(d2) = 98/2 - 2/98.

9. A thermoplastic resin composition as defined in any of Claims 5 to 8, wherein the polyethylene is one which has a melt flow rate (MFR at 190°C and 2.16 kg load) lower than 2 g/10 min.

10. A thermoplastic resin composition as defined in any of Claims 1 to 9, wherein the olefin elastomer is a copolymer rubber composed of ethylene and one or more than one α-olefin other than ethylene, with

the ethylene content being 5-95 wt%.

**11.** A thermoplastic resin composition as defined in any of Claims 1 to 10, wherein the polyester is one or more than one species selected from polyethylene terephthalate, polypropylene terephthalate, polytetramethylene terephthalate (polybutylene terephthalate), polyhexamethylene terephthalate, polycyclohexane-1,4-dimethylol terephthalate, and polyneopentyl terephthalate.

**12.** A thermoplastic resin composition as defined in any of Claims 1 to 11, wherein the polyamide is one which is one or more than one species selected from nylon 6, nylon 66, nylon 610, nylon 612, nylon 11, nylon 12, aromatic nylons, and amorphous nylons.

**13.** A thermoplastic resin composition which comprises (a) a polyester or polyamide and (b1') an olefin elastomer containing 20-95 wt% ethylene which is modified with an unsaturated glycidyl compound represented by the formula (I) below, wherein the polyester or polyamide and the modified olefin elastomer are characterized by

$$X < Y < 10X$$

(where X denotes the melt flow rate (at 275°C under a load of 2.16 kg) of the former and Y denotes the melt flow rate (at 275°C under a load of 21.6 kg) of the latter), and the ratio of component (a) to component (b1') is defined by (a)/(b1') = 99/1 - 50/50 by weight

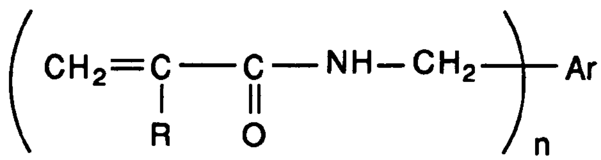

(I)

(where R denotes a hydrogen atom or $C_{1-6}$ alkyl group; Ar denotes a $C_{6-20}$ aromatic hydrocarbon group having at least one glycidyloxy group; and n is an integer of 1 to 4.)

**14.** A process for producing a thermoplastic resin composition, said process comprising melt-mixing at 200-300°C (A) 50-99 wt% of (a) a polyester or polyamide and (B) 50-1 wt% of a modified olefin elastomer which is formed by melt-mixing at 150-300°C (c) 100 parts by weight of an olefin elastomer, (f) 0.2-10 parts by weight of an unsaturated glycidyl compound represented by the formula (I) below, and (g) 0.001-0.5 parts by weight of radical polymerization catalyst, with the amount of the unsaturated glycidyl compound being 25-200 times that of the radical polymerization catalyst and the ratio of the amount of the unsaturated glycidyl compound (f1) which has been grafted to the olefin elastomer to the amount of the unsaturated glycidyl compound (f2) which has become polymerized without grafting to the olefin elastomer being (f1/(f2) = 1-5 by weight.

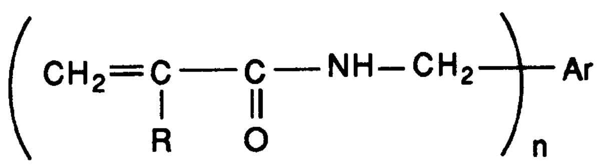

(I)

(where R denotes a hydrogen atom or $C_{1-6}$ alkyl group; Ar denotes a $C_{6-20}$ aromatic hydrocarbon group having at least one glycidyloxy group; and n is an integer of 1 to 4.)

**15.** Automotive engineering parts, home electric appliance parts, industrial machine parts, sporting goods, furniture, stationery and packaging materials made of the resin composition according to any of claims 1 to 13.